# EUROPEAN PATENT APPLICATION

(11) **EP 4 819 628 A1**
(43) Date of publication of application: **07.10.2026**
(21) Application number: 24897397.6
(22) Date of filing: 20.11.2024
(51) Int. Cl.: H04N 23/12, G06T 1/00, H04N 25/13, H04N 25/46

(54) **IMAGE PROCESSING METHOD AND IMAGE PROCESSING SYSTEM**

(30) Priority: 29.11.2023 JP 2023201690
(71) Applicant: Panasonic Intellectual Property Management Co., Ltd., Kadoma-shi, Osaka 571-0057 (JP)
(72) Inventor: YAKO, Motoki, Kadoma-shi, Osaka 571-0057 (JP); SATO, Satoshi, Kadoma-shi, Osaka 571-0057 (JP)
(74) Representative: Grünecker Patent- und Rechtsanwälte PartG mbB
(86) International application number: PCT/JP2024/041057
(87) International publication number: WO 2025/115711

(57) **Abstract**

An image processing method includes detecting optical signals that correspond to pixels through an optical element having, for each of optical components, optical transmittances that correspond to the pixels (S101); acquiring a first compressed image signal obtained by summing the optical signals for each adjacent pixel group including two or more adjacent pixels among the pixels (S102); and generating a first reconstruction image signal group having reconstruction image signals that correspond to the optical components from the first compressed image signal in accordance with first transmittance information concerning the optical transmittances (S103).

## Description

### Technical Field

The present disclosure relates to an image processing method and others.

### Background Art

Patent Literature 1 describes a compressive sensing method including binning. Patent Literature 2 describes calculating image data in wavelength bands by using a compressive sensing method. Non Patent Literature 1 describes compressive sensing over spatial, spectral, and polarization domains. Non Patent Literature 2 describes multispectral polarization filter array. Non Patent Literature 3 describes a multispectral polarization camera. Non Patent Literature 4 and Non Patent Literature 5 describe a technique related to a hyperspectral image.

### Citation List

### Patent Literature

PTL 1: Japanese Unexamined Patent Application Publication No. 2015-056903
PTL 2: Japanese Unexamined Patent Application Publication No. 2016-156801 Non Patent Literature
NPL 1: Chen Fu et al., "Compressive spectral polarization imaging by a pixelized polarizer and colored patterned detector", Journal of the Optical Society of America A, 32, 11, 2178-2188 (2015)
NPL 2: Kazuma Shinoda et al., "Snapshot multispectral polarization imaging using a photonic crystal filter array", Optics Express, 26, 12, 15948-15961 (2018)
NPL 3: Kazuma Shinoda et al., "Alignment-free filter array: Snapshot multispectral polarization imaging based on a Voronoi-like random photonic crystal filter", Optics Express, 28, 26, 38867-38882 (2020)
NPL 4: "Establishing a World-First Technology for Capturing Hyperspectral Images and Videos by Combining Meta-lens and AI with Ordinary Digital Cameras - Turning an "ordinary camera" into a "camera that can see the nature of things" through the fusion of optical technology and AI-", [online], October 24, 2022, Nippon Telegraph and Telephone Corporation, [retrieved on November 16, 2023], Internet <URL: https://group.ntt/jp/newsrelease/2022/10/24/221024a.html>
NPL 5: Ahasan Ahamed et.al., "Reconstruction-based spectroscopy using CMOS image sensors with random photon-trapping nanostructure per sensor", Proc. SPIE 11971, High-Speed Biomedical Imaging and Spectroscopy VII, 1197106, 2 March 2022

### Summary of Invention

However, sensor sensitivity is sometimes low. Image processing may be performed to effectively increase the sensor sensitivity, but the image processing may undesirably cause parallax in an image.

In view of this, an image processing method and others that can effectively increase sensor sensitivity while reducing parallax that occurs in an image are provided.

An image processing method according to an aspect of the present disclosure includes detecting optical signals that correspond to pixels through an optical element having optical transmittances that correspond to the pixels; acquiring a first compressed image signal obtained by summing the optical signals for each adjacent pixel group including two or more adjacent pixels among the pixels; and generating a first reconstruction image signal group from the first compressed image signal in accordance with first transmittance information concerning the optical transmittances.

It should be noted that general or specific embodiments may be implemented as a system, a device, a method, an integrated circuit, a computer program, a computer-readable non-transitory storage medium such as a CD-ROM, or any selective combination thereof.

According to the image processing method according to the aspect of the present disclosure and the others, it is possible to increase effective sensor sensitivity while reducing parallax that occurs in an image.

### Brief Description of Drawings

[Fig. 1] Fig. 1 is a conceptual diagram illustrating binning in a first reference example.
[Fig. 2] Fig. 2 is a conceptual diagram illustrating binning in a second reference example.
[Fig. 3] Fig. 3 is a conceptual diagram illustrating binning in a third reference example.
[Fig. 4] Fig. 4 is a conceptual diagram illustrating binning in a fourth reference example.
[Fig. 5] Fig. 5 is a conceptual diagram illustrating binning in a fifth reference example.
[Fig. 6] Fig. 6 is a conceptual diagram illustrating binning in a sixth reference example.
[Fig. 7] Fig. 7 is a block diagram illustrating an example of a configuration of an image processing system according to an embodiment.
[Fig. 8] Fig. 8 is a conceptual diagram illustrating an example of a configuration of an imaging device according to the embodiment.
[Fig. 9] Fig. 9 is a conceptual diagram illustrating an example of a configuration of a filter array according to the embodiment.
[Fig. 10] Fig. 10 is a graph illustrating an example of a transmission spectrum of a filter according to the embodiment.
[Fig. 11] Fig. 11 is a graph illustrating an example of a transmission spectrum of another filter according to the embodiment.
[Fig. 12] Fig. 12 is a graph illustrating an example of transmittance of the filter array in a first wavelength band according to the embodiment.
[Fig. 13] Fig. 13 is a graph illustrating an example of transmittance of the filter array in a second wavelength band according to the embodiment.
[Fig. 14] Fig. 14 is a flowchart illustrating an example of operation of the image processing system according to the embodiment.
[Fig. 15] Fig. 15 is a block diagram illustrating a first specific example of the configuration of the image processing system according to the embodiment.
[Fig. 16] Fig. 16 is a block diagram illustrating a first specific example of the operation of the image processing system according to the embodiment.
[Fig. 17] Fig. 17 is a block diagram illustrating a second specific example of the operation of the image processing system according to the embodiment.
[Fig. 18] Fig. 18 is an explanatory view illustrating binning of a compressed image signal according to the embodiment.
[Fig. 19] Fig. 19 is an explanatory view illustrating binning of mask data according to the embodiment.
[Fig. 20] Fig. 20 is a conceptual diagram illustrating binning according to the embodiment.
[Fig. 21] Fig. 21 is an illustrative view illustrating reconstruction images according to the embodiment.
[Fig. 22] Fig. 22 is a block diagram illustrating a second specific example of the configuration of the image processing system according to the embodiment.
[Fig. 23] Fig. 23 is a block diagram illustrating a third specific example of the operation of the image processing system according to the embodiment.
[Fig. 24] Fig. 24 is a block diagram illustrating a third specific example of the configuration of the image processing system according to the embodiment.
[Fig. 25] Fig. 25 is a block diagram illustrating a fourth specific example of the operation of the image processing system according to the embodiment.
[Fig. 26] Fig. 26 is a conceptual diagram illustrating a method for generating reconstruction image signals that correspond to polarization directions according to the embodiment.
[Fig. 27] Fig. 27 illustrates pixels arranged in a matrix included in the image sensor and pixel values output by the pixels.
[Fig. 28] Fig. 28 illustrates an image I1₁, ..., and an image I1_{w}.
[Fig. 29] Fig. 29 shows that a circuit can convert the image I1₁ into an image I2₁, ..., and convert the image I1_{w} into an image I2_{w}.

### Description of Embodiments

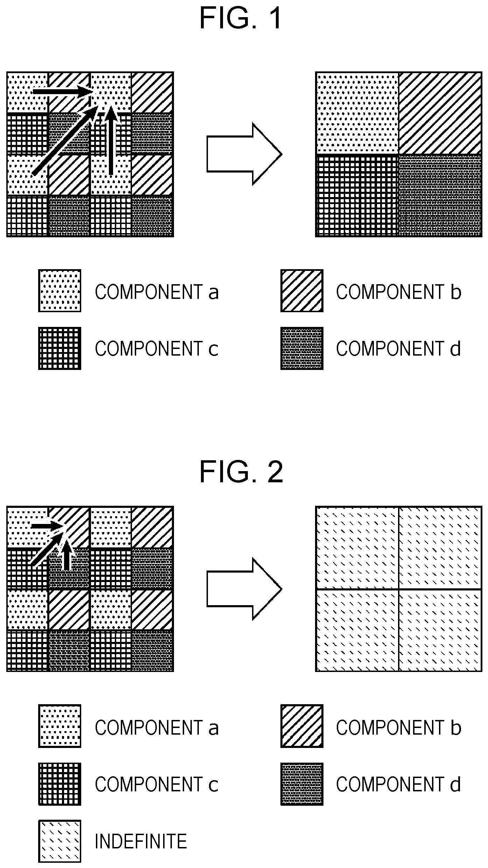

Fig. 1 is a conceptual diagram illustrating binning in a first reference example. For example, a camera detects, for each pixel, a component value of an optical signal. However, it is difficult to detect component values for each pixel. In view of this, for example, a camera is configured to detect component values for each pixel group including pixels.

Specifically, for example, as illustrated in the example on the left side in Fig. 1, a camera detects values of four components a, b, c, and d for each pixel group including four pixels. An image is expressed by these values. Binning may be performed to increase effective sensor sensitivity. In the binning, pixels are unified. That is, values of the pixels are summed. This obtains a larger value, thereby increasing the effective sensor sensitivity.

In the example of Fig. 1, pixels corresponding to the same kind of component are unified. Specifically, four pixels that are spaced apart by one pixel from each other are unified. Since the pixels to be unified are spaced apart from each other, the unification may undesirably cause parallax. Here, the parallax means a difference in imaging region that occurs since spatial positions of the pixels are not the same, and a visual difference can occur when an image is output.

For example, an edge may be present in the spacing of one pixel. In a case where four pixels that are spaced apart by this pixel from each other are unified, there is a possibility that information of the edge is lost. Furthermore, in a case where four pixels to be unified are spaced apart by one pixel from each other, a pixel different from any of the four pixels may be generated. This may cause a false color. Therefore, there is a possibility that a visual difference occurs since the pixels to be unified are spatially separated, that is, a visual difference occurs due to parallax.

Fig. 2 is a conceptual diagram illustrating binning in a second reference example. The example of Fig. 2 is different from the example of Fig. 1 in that pixels that are not spaced apart by one pixel from each other and are adjacent to each other are unified. In this case, values of the four components a, b, c, and d are unified. Therefore, a value of each component is lost. It is difficult to derive, from the values after the unification, an image close to an image constituted by the values before the unification.

For example, in a case where a pixel at a row x and a column y among pixels arranged in m rows and n columns is expressed as (x, y), a pixel adjacent to (x, y) is expressed as (x - 1, y - 1), (x, y - 1), (x + 1, y - 1), (x - 1, y), (x + 1, y), (x - 1, y + 1), (x, y + 1), or (x + 1, y + 1). Here, x is a natural number equal to or less than m, and y is a natural number equal to or less than n.

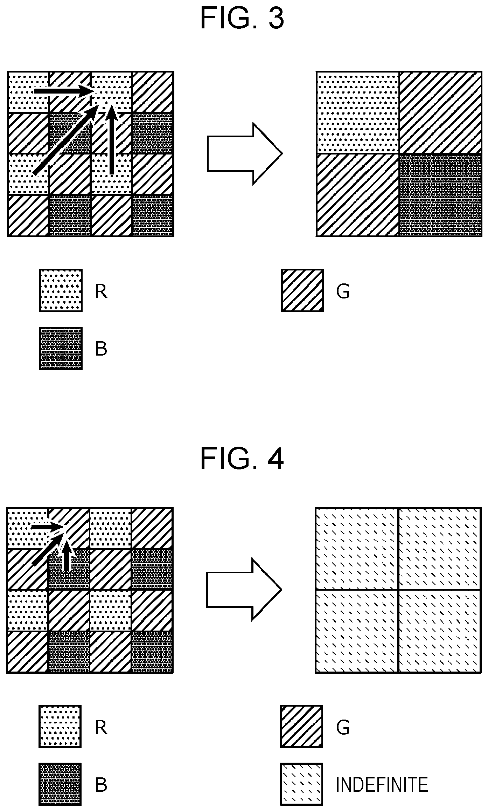

Fig. 3 is a conceptual diagram illustrating binning in a third reference example. In this example, an RGB camera detects values of three wavelength bands corresponding to R (red), G (green), and B (blue) for each pixel group including four pixels. Specifically, among the four pixels, one pixel corresponds to R (red), two pixels correspond to G (green), and one pixel corresponds to B (blue).

Even in this case, in the binning, pixels are unified without mixing R (red), G (green), and B (blue), and therefore four pixels that are spaced apart by one pixel from each other are unified. Therefore, parallax occurs as in the example of Fig. 1.

Fig. 4 is a conceptual diagram illustrating binning in a fourth reference example. The example of Fig. 4 is different from the example of Fig. 3 in that pixels that are not spaced apart by one pixel from each other and are adjacent to each other are unified. In this case, values of R (red), G (green), and B (blue) are unified. Therefore, a value of each of R (red), G (green), and B (blue) is lost. It is difficult to derive, from the values after the unification, an image close to an image constituted by the values before the unification.

That is, it is not easy to increase sensitivity while reducing parallax by binning in an RGB camera although it is possible to increase sensitivity while reducing parallax by binning of adjacent pixels in a monochromatic camera.

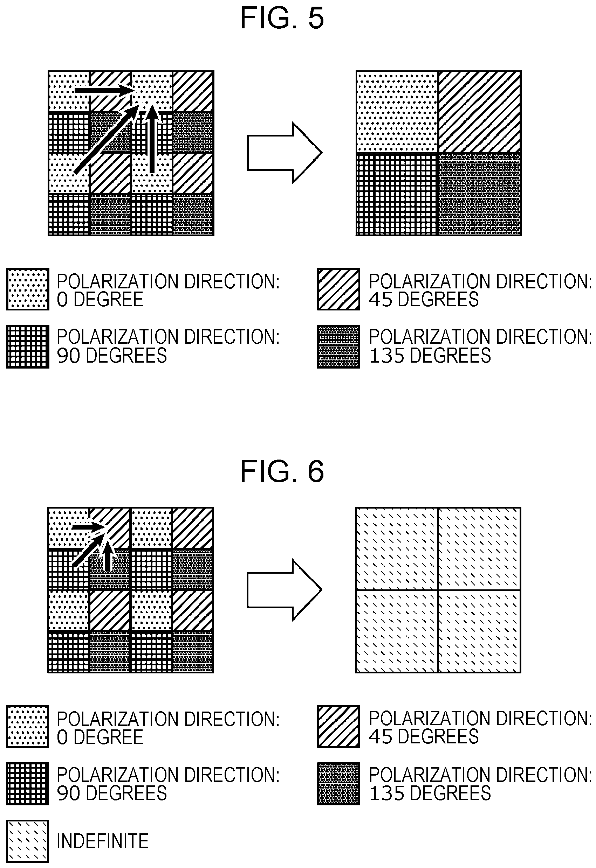

Fig. 5 is a conceptual diagram illustrating binning in a fifth reference example. In this example, a polarization camera detects values of four polarization directions for each pixel group including four pixels. Specifically, among the four pixels, one pixel corresponds to a polarization direction of 0 degree, one pixel corresponds to a polarization direction of 45 degrees, one pixel corresponds to a polarization direction of 90 degrees, and one pixel corresponds to a polarization direction of 135 degrees.

Also in this case, in the binning, pixels are unified without mixing the polarization direction of 0 degree, the polarization direction of 45 degrees, the polarization direction of 90 degrees, and the polarization direction of 135 degrees, and therefore four pixels that are spaced apart by one pixel from each other are unified. Therefore, parallax occurs, as in the example of Fig. 1.

Fig. 6 is a conceptual diagram illustrating binning in a sixth reference example. The example of Fig. 6 is different from the example of Fig. 5 in that pixels that are not spaced apart by one pixel from each other and are adjacent to each other are unified. In this case, values of the polarization direction of 0 degree, the polarization direction of 45 degrees, the polarization direction of 90 degrees, and the polarization direction of 135 degrees are unified. Therefore, a value of each of the polarization direction of 0 degree, the polarization direction of 45 degrees, the polarization direction of 90 degrees, and the polarization direction of 135 degrees is lost. It is difficult to derive, from the values after the unification, an image close to an image constituted by the values before the unification.

In any of these cases, in a camera that detects component values, it is not easy to increase sensitivity by binning while reducing parallax.

In view of this, an image processing method according to an example 1 includes detecting optical signals that correspond to pixels through an optical element having, for each of optical components, optical transmittances that correspond to the pixels; acquiring a first compressed image signal obtained by summing the optical signals for each adjacent pixel group including two or more adjacent pixels among the pixels; and generating a first reconstruction image signal group having reconstruction image signals that correspond to the optical components from the first compressed image signal in accordance with first transmittance information concerning the optical transmittances.

This makes it possible to generate the reconstruction image signals of the components from the first compressed image signal in which the optical signals are summed for each adjacent pixel group in accordance with the first transmittance information concerning the optical transmittances of the components. That is, it is possible to sum the adjacent pixels and separate the reconstruction image signals of the components. It is therefore possible to increase effective sensor sensitivity while reducing parallax that occurs in an image.

An image processing method according to an example 2 is the image processing method according to the example 1 and may be an image processing method in which the optical components are wavelength bands.

This makes it possible to separate the reconstruction image signals of the wavelength bands with high precision. That is, it is possible to increase sensitivity and maintain wavelength resolution while reducing parallax.

An image processing method according to an example 3 is the image processing method according to the example 1 or 2 and may be an image processing method in which the first transmittance information is acquired by unifying, for each adjacent pixel group including the two or more adjacent pixels, the optical transmittances of second transmittance information having, for each of the optical components, the optical transmittances that correspond to the pixels as information.

This makes it possible to accurately generate the reconstruction image signals of the components from the first compressed image signal in which the optical signals are summed for each adjacent pixel group in accordance with the first transmittance information in which the optical transmittances are unified for each adjacent pixel group.

An image processing method according to an example 4 is the image processing method according to any of the examples 1 to 3 and may be an image processing method in which an optical signal that corresponds to a first pixel among the two or more adjacent pixels is an optical signal that has passed through a first region of the optical element, an optical signal that corresponds to a second pixel among the two or more adjacent pixels is an optical signal that has passed through a second region of the optical element, and an optical transmission spectrum of the first region with respect to the optical components is different from an optical transmission spectrum of the second region with respect to the optical components.

This makes it possible to accurately generate the reconstruction image signals of the components from the first compressed image signal in accordance with different optical transmission spectra that correspond to the pixels.

An image processing method according to an example 5 is the image processing method according to any of the examples 1 to 4 and may be an image processing method in which the optical element has optical transmission spectra that correspond to the pixels, each of the optical transmission spectra is an optical transmission spectrum with respect to the optical components, and the optical transmission spectra have spatial randomness with respect to the pixels.

This makes it possible to accurately generate the reconstruction image signals of the components from the first compressed image signal in accordance with the spatially random optical transmission spectra.

An image processing method according to an example 6 is the image processing method according to any of the examples 1 to 5 and may be an image processing method further including acquiring a second compressed image signal having the optical signals, in which the first compressed image signal is acquired by summing the optical signals of the second compressed image signal for each adjacent pixel group including the two or more adjacent pixels.

This makes it possible to acquire the first compressed image signal by using calculation of summing the optical signals of the second compressed image signal for each adjacent pixel group. It is therefore possible to flexibly control the summing process.

An image processing method according to an example 7 is the image processing method according to any of the examples 1 to 6 and may be an image processing method further including switching between a first mode in which the first reconstruction image signal group is generated from the first compressed image signal and a second mode in which a second reconstruction image signal group is generated from a second compressed image signal having the optical signals.

This makes it possible to adaptively switch between the first mode in which reconstruction from the first compressed image signal in which adjacent pixels are unified is performed and the second mode in which reconstruction from the second compressed image signal in which adjacent pixels are not unified is performed.

An image processing method according to an example 8 is the image processing method according to the example 7 and may be an image processing method in which in the switching between the first mode and the second mode, the first mode and the second mode are switched on the basis of a user's operation.

This makes it possible to switch, in accordance with a user's intention, between the first mode in which reconstruction from the first compressed image signal in which adjacent pixels are unified is performed and the second mode in which reconstruction from the second compressed image signal in which adjacent pixels are not unified is performed.

An image processing method according to an example 9 is the image processing method according to the example 7 or 8 and may be an image processing method in which the number of pixel signals of each reconstruction image signal of the first reconstruction image signal group is smaller than the number of pixel signals of each reconstruction image signal of the second reconstruction image signal group.

This makes it possible to reduce a calculation amount in the first mode in which reconstruction from the first compressed image signal in which adjacent pixels are unified is performed, as compared with the second mode in which reconstruction from the second compressed image signal in which adjacent pixels are not unified is performed.

An image processing method according to an example 10 is the image processing method according to any one of the examples 1 to 9 and may be an image processing method in which the number of pixel signals of each reconstruction image signal of the first reconstruction image signal group is smaller than the number of pixels.

This makes it possible to efficiently generate the reconstruction image signals of the components from the first compressed image signal while reducing the calculation amount.

An image processing method according to an example 11 is the image processing method according to any one of the examples 1 to 10 and may be an image processing method in which the number of pixel signals of each reconstruction image signal of the first reconstruction image signal group is identical to the number of pixel signals of the first compressed image signal.

This makes it possible to generate reconstruction image signals having the same resolution as the resolution of the first compressed image signal. That is, it is possible to generate the reconstruction image signals while maintaining the resolution.

An image processing method according to an example 12 is the image processing method according to any one of the examples 1 to 11 and may be an image processing method in which the first transmittance information has, for each of the optical components, a smaller number of optical transmittances than the optical transmittances that correspond to the pixels as information.

This makes it possible to efficiently generate the reconstruction image signals of the components from the first compressed image signal while reducing the calculation amount.

An image processing method according to an example 13 is the image processing method according to the example 1 and may be an image processing method in which the optical components are polarization directions.

This makes it possible to separate the reconstruction image signals of the polarization directions with high precision. That is, it is possible to increase sensitivity and maintain polarization angle resolution while reducing parallax.

An image processing method according to an example 14 is the image processing method according to any one of the examples 1 to 13 and may be an image processing method in which the first compressed image signal is obtained by summing the optical signals for each adjacent pixel group including the two or more adjacent pixels and performing an averaging process.

This makes it possible to improve an SN ratio and to increase effective sensitivity of an image sensor while reducing parallax that occurs in an image.

An image processing method according to an example 15 includes detecting optical signals that correspond to pixels through an optical element having optical transmission spectra that correspond to the pixels; acquiring a first compressed image signal obtained by summing the optical signals for each adjacent pixel group including two or more adjacent pixels among the pixels; and generating a first reconstruction image signal group having reconstruction image signals that correspond to wavelength bands from the first compressed image signal in accordance with information concerning the optical transmission spectra.

This makes it possible to generate the reconstruction image signals of the wavelength bands from the first compressed image signal in which the optical signals are summed for each adjacent pixel group in accordance with the information concerning the optical transmission spectra. That is, it is possible to sum the adjacent pixels and separate the reconstruction image signals of the wavelength bands. It is therefore possible to increase effective sensor sensitivity while reducing parallax that occurs in an image.

An image processing system according to an example 16 includes an image sensor that detects optical signals that correspond to pixels through an optical element having, for each of optical components, optical transmittances that correspond to the pixels; and a processing circuit that acquires a first compressed image signal obtained by summing the optical signals for each adjacent pixel group including two or more adjacent pixels among the pixels, in which the processing circuit generates a first reconstruction image signal group having reconstruction image signals that correspond to the optical components from the first compressed image signal in accordance with first transmittance information concerning the optical transmittances.

This makes it possible to generate the reconstruction image signals of the components from the first compressed image signal in which the optical signals are summed for each adjacent pixel group in accordance with the first transmittance information concerning the optical transmittances of the components. That is, it is possible to sum the adjacent pixels and separate the reconstruction image signals of the components. It is therefore possible to increase effective sensor sensitivity while reducing parallax that occurs in an image.

An image processing system according to an example 17 includes an image sensor that detects optical signals that correspond to pixels through an optical element having optical transmission spectra that correspond to the pixels, and a processing circuit that acquires a first compressed image signal obtained by summing the optical signals for each adjacent pixel group including two or more adjacent pixels among the pixels, in which the processing circuit generates a first reconstruction image signal group having reconstruction image signals that correspond to wavelength bands from the first compressed image signal in accordance with information concerning the optical transmission spectra.

This makes it possible to generate the reconstruction image signals of the wavelength bands from the first compressed image signal in which the optical signals are summed for each adjacent pixel group in accordance with the information concerning the optical transmission spectra. That is, it is possible to sum the adjacent pixels and separate the reconstruction image signals of the wavelength bands. It is therefore possible to increase effective sensor sensitivity while reducing parallax that occurs in an image.

Furthermore, these general or specific aspects may be implemented as a system, a device, a method, an integrated circuit, a computer program, a computer-readable non-transitory storage medium such as a CD-ROM, or any selective combination thereof.

An embodiment is specifically described below with reference to the drawings. Note that the embodiment below illustrates a general or specific example. Numerical values, shapes, materials, constituent elements, the way in which the constituent elements are disposed and connected, steps, the order of steps, and the like in the embodiment below are examples and do not limit the claims.

In the present disclosure, a pixel is defined as a region of an image. Specifically, a pixel is, for example, defined as a minimum unit of a region of an image. Detecting an optical signal by a pixel means detecting an optical signal corresponding to a pixel and means an optical signal by a light receiving element corresponding to a pixel. An image signal is a signal for expressing an image, and an image can be expressed by an image signal. The image signal can include pixel signals. A pixel signal may, for example, correspond to an optical signal detected by a pixel.

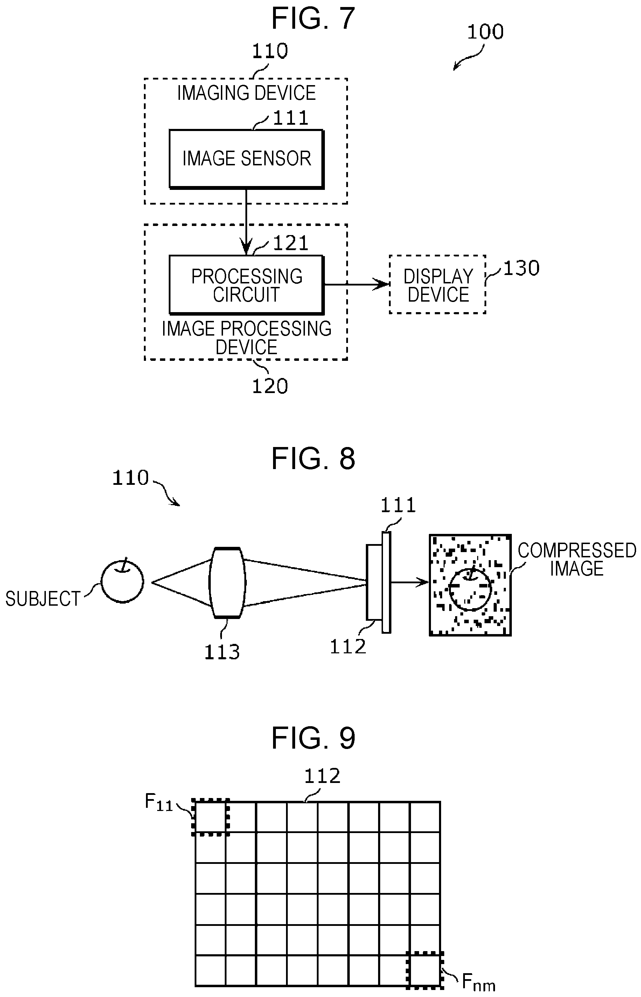

Fig. 7 is a block diagram illustrating an example of a configuration of an image processing system according to an embodiment. As illustrated in Fig. 7, an image processing system 100 includes an image sensor 111 and a processing circuit 121. The image processing system 100 may further include a display device 130. Furthermore, the image processing system 100 may include an imaging device 110 and an image processing device 120. The imaging device 110 may include the image sensor 111. The image processing device 120 may include the processing circuit 121.

The image sensor 111 detects an optical signal for each pixel and generates and acquires an image signal including optical signals corresponding to pixels. In this example, the image sensor 111 acquires a compressed image signal. Specifically, for example, the image sensor 111 acquires a compressed image signal in which pieces of information on four or more wavelength bands are superimposed for each pixel on the basis of a filter array that will be described later. Note that the wavelength bands are sometimes referred to simply as bands.

The image sensor 111 may be a monochromatic photodetector including photodetection elements arranged in a matrix. More specifically, the image sensor 111 may be a Charge-Coupled Device (CCD) image sensor, a Complementary Metal Oxide Semiconductor (CMOS) image sensor, an infrared array image sensor, a terahertz array image sensor, or a millimeter-wave array image sensor.

Alternatively, the image sensor 111 may be a color-type photodetector. A wavelength range that can be detected by the image sensor 111 is not limited, and may be, for example, visible light, ultraviolet light, infrared light, terahertz waves, or any combination thereof.

The processing circuit 121 is a circuit that performs information processing. For example, the processing circuit 121 generates reconstruction image signals that correspond to the wavelength bands by performing reconstruction calculation on the compressed image signal. In this example, reconstruction images are spectral images, and the reconstruction image signals are spectral image signals.

The reconstruction images expressed by the reconstruction image signals may constitute a hyperspectral image expressed by information on the four or more wavelength bands. For example, the hyperspectral image includes four or more spectral images corresponding to the four or more wavelength bands. The reconstruction calculation may be the same as the reconstruction calculation described in Patent Literature 2. Specifically, the four or more spectral images may be generated as the hyperspectral image on the basis of the following formula (1).
[Math. 1] $g = Hf = H \left[\begin{matrix}{f}_{1} \\ {f}_{2} \\ ⋮ \\ {f}_{w}\end{matrix}\right]$ (1)

In the formula (1), g represents data indicative of the compressed image and is expressed, for example, as a one-dimensional array (i.e., a vector). In a case where the compressed image is an image having n × m pixels, the data g is expressed as a one-dimensional array having n × m elements. f represents data indicative of w spectral images that correspond to w wavelength bands on a one-to-one basis and is expressed, for example, as a one-dimensional array. In a case where the w spectral images constitute a hyperspectral image, w is an integer of four or more.

f₁ represents data of a spectral image corresponding to a wavelength band W₁, f₂ is data of a spectral image corresponding to a wavelength band W₂, ..., and f_{w} represents data of a spectral image corresponding to a wavelength band W_{w}.

The data f₁, f₂, ..., and f_{w} are each expressed, for example, as a one-dimensional array. In a case where each spectral image is an image having n × m pixels, the data f₁, f₂, ..., and f_{w} are each expressed as a one-dimensional array having n × m elements, and the data f is expressed as a one-dimensional array having n × m × w elements. H is a matrix of n × m rows and n × m × w columns, and is sometimes referred to as a system matrix and corresponds to mask data.

The matrix H may be determined on the basis of a transmission spectrum of the wavelength band W₁ of a filter array that will be described later, a transmission spectrum of the wavelength band W₂ of the filter array, ..., and a transmission spectrum of the wavelength band W_{w} of the filter array.

The data f that satisfies the formula (1) can be estimated by using a compressed sensing method, and can be estimated, specifically, by a formula (2).
[Math. 2] $f = {argmin}_{f} \left\{{\left‖g-Hf\right‖}_{2}^{2}+τΦ\left(f\right)\right\}$ (2)

The formula (2) means that data f that minimizes a sum of the first term and the second term in the braces is found. The data f can be calculated as final calculation result data by convergence of calculation result data by recursive iterative operation.

The first term in the braces in the formula (2) represents a sum of squares of a difference between the data g and data Hf obtained by conversion of the data f in the estimation process by the matrix H, that is, a residual term. Although a sum of squares is used in this formula, a sum of absolute values, a square-root of sum of squares, or the like may be used instead of the sum of squares.

The sum of squares of the difference between the data Hf and the data g is (g₁ - r₁) × (g₁ - r₁) + ... + (g_{n × m} - r_{n × m}) × (g_{n × m} - r_{n × m}). Here, g₁, ..., and g_{n × m} are elements of the data g expressed as g = (g₁ ... g_{n × m})^{T}. Furthermore, r₁, ..., and r_{n × m} are elements of the data Hf expressed as Hf = (r₁ ... r_{n × m})^{T}.

The second term in the braces in the formula (2) is a regularization term and is sometimes called a stabilization term. Φ(f) represents a constraint condition in regularization of f and is a function reflecting sparse information of the data f. This function brings an effect of smoothing or stabilizing the data f. Φ(f) can be, for example, expressed by discrete cosine transform (DCT), wavelet transform, Fourier transform, total variation (TV), any combination thereof, or the like.

τ is a weight coefficient of the regularization term and corresponds to a degree of influence of regularization in the reconstruction calculation. As the value of τ increases, the degree of influence of the regularization becomes greater, and solution convergence in the iterative operation becomes stronger. Conversely, as the value of τ decreases, the degree of influence of the regularization becomes smaller, and solution convergence in the iterative operation becomes weaker.

The display device 130 is a display for displaying information. A compressed image, a monochromatic image, an RGB image, a hyperspectral image, or the like is displayed on the display device 130 by the processing circuit 121. The display device 130 may be, for example, a liquid crystal display (LCD), an organic light-emitting diode (OLED) display, or the like.

A graphical user interface (GUI) may be displayed on the display device 130. The display device 130 may be a touch panel. A user may input information on the display device 130. The processing circuit 121 may acquire information from the user via the display device 130. That is, the display device 130 may be an input output device. Alternatively, the processing circuit 121 may acquire information from the user via an input device different from the display device 130.

Fig. 7 illustrates an example of the configuration of the image processing system 100, and the configuration of the image processing system 100 is not limited to the example illustrated in Fig. 7. For example, devices may be unified into a single device or a single device may be distributed into devices. The devices arranged in a distributed manner may be communicable with each other through wired or wireless communication.

The processing circuit 121 corresponds to an acquirer that acquires a compressed image signal from the image sensor 111, a generator that generates a reconstruction image signal group, a display controller that displays, as a reconstruction image group, the reconstruction image signal group on the display device 130, and the like. Not the processing circuit 121, but the image processing device 120 may include one or more of these constituent elements.

Fig. 8 is a conceptual diagram illustrating an example of a configuration of the imaging device 110 illustrated in Fig. 7. The imaging device 110 can have a configuration similar to that of the imaging device disclosed in Patent Literature 2. For example, the imaging device 110 includes the image sensor 111, a filter array 112, and an optical system 113.

The filter array 112 is disposed on an optical path of light entering from a subject, and is disposed between the optical system 113 and the image sensor 111. The filter array 112 functions as an encoding element described in Patent Literature 2. The filter array 112 may be integral with the image sensor 111.

Note that the position of the filter array 112 is not limited to that illustrated in Fig. 8. For example, the filter array 112 may be disposed away from the image sensor 111 between the optical system 113 and the image sensor 111. Alternatively, for example, the filter array 112 may be disposed between the subject and the optical system 113. Alternatively, for example, the filter array 112 may be disposed in the optical system 113.

The optical system 113 is disposed on an optical path of light entering from the subject and is disposed between the subject and the filter array 112. The optical system 113 includes at least one lens and can form an image of the subject on an imaging surface of the image sensor 111 through the filter array 112.

Note that the configuration and position of the optical system 113 are not limited to those in Fig. 8. For example, the optical system 113 may be disposed between the filter array 112 and the image sensor 111. Furthermore, for example, the optical system 113 may include lenses arranged on the optical path. In this case, the filter array 112 may be disposed between adjacent lenses among the lenses.

The filter array 112 and the optical system 113 are examples of an optical element. The image sensor 111 may detect an optical signal through an optical element different from the filter array 112 and the optical system 113. The optical element may be an object expressed as an optical member, an optical mechanism, an optical device, or the like.

Fig. 9 is a conceptual diagram illustrating an example of a configuration of the filter array 112 illustrated in Fig. 8. The filter array 112 includes filters F₁₁, ..., and Fₙₘ arranged in a matrix. In the example illustrated in Fig. 9, the filter array 112 includes 48 filters F₁₁, ..., and Fₙₘ arranged in 6 rows and 8 columns. The filter F₁₁ is an upper left filter among the 48 filters F₁₁, ..., and Fₙₘ, and the filter Fₙₘ is a lower right filter among the 48 filters F₁₁, ..., and Fₙₘ.

Note that the number of filters F₁₁, ..., and Fₙₘ included in the filter array 112 is not limited to 48. For example, the number of filters F₁₁, ..., and Fₙₘ included in the filter array 112 may be similar to the number of pixels of the image sensor 111 and may be determined according to application, for example, in a range from several tens to several tens of millions.

For example, the filter array 112 includes n × m filters F₁₁, ..., and Fₙₘ that correspond to n × m pixels. In the wavelength bands W₁, ..., and W_{w}, the filters F₁₁, ..., and Fₙₘ have transmission spectra S₁₁, ..., and Sₙₘ, respectively. The transmission spectra S₁₁, ..., and Sₙₘ may all be different. Alternatively, some of the transmission spectra S₁₁, ..., and Sₙₘ may be identical. The transmission spectra can mean light transmission spectra.

The n × m filters F₁₁, ..., and Fₙₘ have n × m × w transmittances S_{11W1}, ..., and S_{nmWw} in the w wavelength bands W₁, ..., and W_{w}. The transmittances S_{11W1}, ..., and S_{nmWw} may all be different. Alternatively, some of the transmittances S_{11W1}, ..., and S_{nmWw} may be identical. The transmittances can mean optical transmittances.

Transmittance of a filter β in a wavelength band W_{α} may be the following formula (3).
[Math. 3] ${\int }_{W α min}^{W α max} h \left(λ\right) dλ$ (3)

Wαmin is a minimum wavelength value of the wavelength band W_{α}, Wαmax is a maximum wavelength value of the wavelength band W_{α}, h(λ) is a function indicative of a transmission spectrum, and λ is a wavelength.

Note that the transmittance of the filter β in the wavelength band W_{α} is not limited to the formula (3). For example, the transmittance of the filter β in the wavelength band W_{α} may be transmittance obtained by dividing the formula (3) by (Wαmax - Wαmin). Alternatively, for example, the transmittance of the filter β in the wavelength band W_{α} may be transmittance h(λ_{α0}) at a frequency λ_{α0} representing the wavelength band W_{α}.

The wavelength λ_{α0} is a frequency that satisfies Wαmin ≤ λ_{α0} ≤ Wαmax. For example, the wavelength λ_{α0} may be a central frequency ((Wαmax - Wαmin) / 2) of the wavelength band W_{α}.

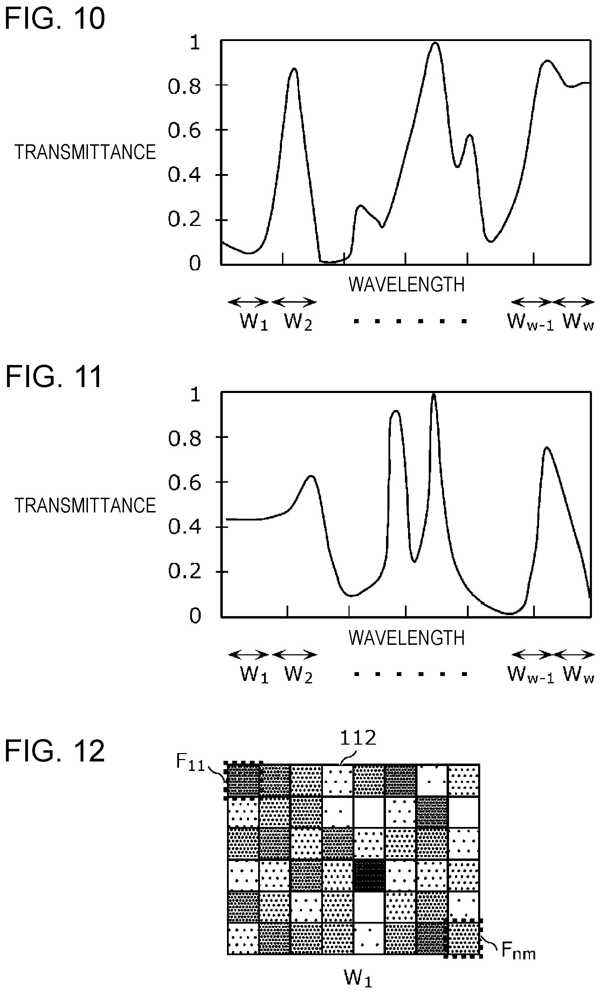

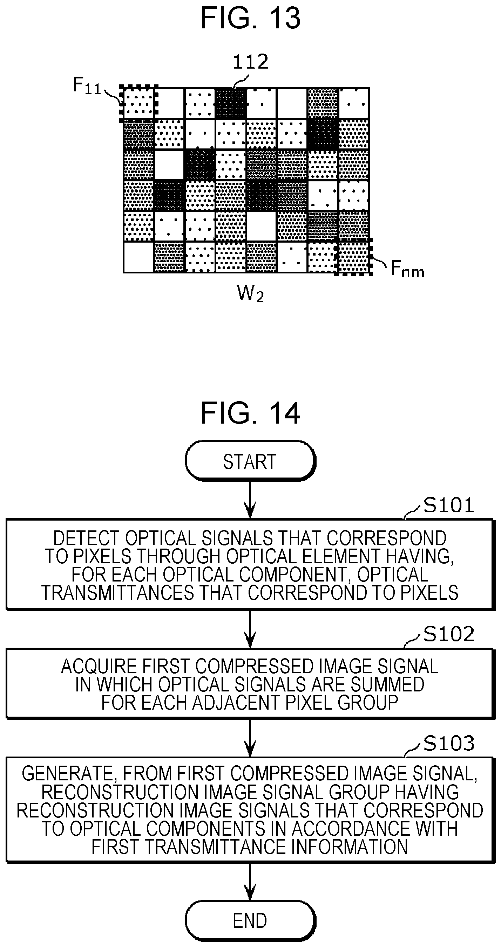

Fig. 10 illustrates an example of a transmission spectrum of the filter F₁₁ illustrated in Fig. 9. Fig. 11 illustrates an example of a transmission spectrum of the filter Fₙₘ illustrated in Fig. 9. Fig. 12 illustrates an example of transmittance of the filter array 112 illustrated in Fig. 9 in the wavelength band W₁. Fig. 13 illustrates an example of transmittance of the filter array 112 illustrated in Fig. 9 in the wavelength band W₂. In Figs. 12 and 13, a density in each region represents transmittance of a filter, and a paler region indicates higher transmittance, and a deeper region indicates lower transmittance.

The filters F₁₁, ..., and Fₙₘ included in the filter array 112 are different from each other in wavelength dependence of transmittance. For example, in the filter F₁₁, the transmittance in the wavelength band W₁ is far lower than the transmittance in the wavelength band W₂. On the other hand, in the filter Fₙₘ, the transmittance in the wavelength band W₁ is almost identical to the transmittance in the wavelength band W₂. That is, the wavelength dependence of transmittance of the filter F₁₁ is different from the wavelength dependence of transmittance of the filter Fₙₘ.

Note that only transmittance in the two wavelength bands W₁ and W₂ among the w wavelength bands W₁, ..., and W_{w} is illustrated and described, and illustration and description of transmittance in the other wavelength bands included in the w wavelength bands W₁, ..., and W_{w} are omitted.

For example, the mask data is expressed by w matrices that correspond to the w wavelength bands W₁, W₂, ..., and W_{w}. Specifically, the mask data is expressed by a matrix of transmittance (transmittance matrix) of n rows and m columns that correspond to pixels of n rows and m columns in each of the w wavelength bands W₁, W₂, ..., and W_{w}. By changing the expression format from the mask data expressed by w matrices each having n rows and m columns, one matrix H having n × m rows and n × m × w columns is obtained.

For example, the image sensor 111 acquires a compressed image through light receiving regions having transmission spectra. Specifically, the image sensor 111 acquires a compressed image through the filter array 112. The light receiving regions can correspond to the filters included in the filter array 112.

Alternatively, the meta-lens described in Non Patent Literature 4 may be used instead of the filter array 112. In this case, wavelength transmittance varies depending on a place. The light receiving regions correspond to such places. Alternatively, the CMOS image sensor described in Non Patent Literature 5 may be used instead of the filter array 112. In this case, a sensing region is processed so that predetermined transmittance is obtained for each pixel. The light receiving regions correspond to such sensing regions.

The light receiving regions may be expressed as an optical element, a modulation element, an encoding element, optical processing regions, masking regions, or the like. For example, the optical element, modulation element, or encoding element may correspond to the light receiving regions.

Fig. 14 is a flowchart illustrating an example of operation of the image processing system 100 illustrated in Fig. 7. In this example, the image sensor 111 of the imaging device 110 detects optical signals that correspond to pixels through the optical element (S101). The optical element has optical transmittances that correspond to the pixels for each of optical components.

Then, the processing circuit 121 of the image processing device 120 acquires a first compressed image signal (S102). In the first compressed image signal, the optical signals detected by the image sensor 111 are summed for each adjacent pixel group. Each adjacent pixel group includes two or more adjacent pixels among the pixels.

Then, the processing circuit 121 generates, from the first compressed image signal, a first reconstruction image signal group having reconstruction image signals that correspond to the optical components in accordance with first transmittance information concerning optical transmittances that correspond to the pixels (S103).

This makes it possible to generate reconstruction image signals of the components from the first compressed image signal in which the optical signals are summed for each adjacent pixel group in accordance with the first transmittance information concerning optical transmittances of each of the components. That is, it is possible to sum adjacent pixels and separate the reconstruction image signals of the components. It is therefore possible to increase effective sensor sensitivity while reducing parallax that occurs in an image.

Having optical transmittances that correspond to the pixels for each of the optical components means having optical transmittances that vary depending on an optical component. That is, for example, the optical element has, for a first optical component, optical transmittances that correspond to the pixels and has, for a second optical component, other optical transmittances that correspond to the same pixels. When optical transmittances that correspond to the pixels are expressed as an optical transmittance group, the optical element has optical transmittance groups that correspond to the optical components.

For example, the optical components may be wavelength bands. This makes it possible to separate reconstruction image signals of the wavelength bands with high precision. That is, it is possible to increase sensitivity and maintain wavelength resolution while reducing parallax.

For example, the first transmittance information may be acquired by unifying, for each adjacent pixel group including two or more adjacent pixels, optical transmittances of second transmittance information having, for each of the optical components, optical transmittances that correspond to the pixels as information. This makes it possible to accurately generate the reconstruction image signals of the components from the first compressed image signal in which the optical signals are summed for adjacent pixel group in accordance with the first transmittance information in which the optical transmittances are unified for each adjacent pixel group.

For example, an optical signal that corresponds to a first pixel among the two or more adjacent pixels may be an optical signal that has passed through a first region of the optical element. An optical signal that corresponds to a second pixel among the two or more adjacent pixels may be an optical signal that has passed through a second region of the optical element. An optical transmission spectrum of the first region with respect to the optical components may be different from an optical transmission spectrum of the second region with respect to the optical components.

This makes it possible to accurately generate the reconstruction image signals of the components from the first compressed image signal in accordance with the different optical transmission spectra corresponding to the pixels.

For example, the optical element may have optical transmission spectra that correspond to the pixels. Each of the optical transmission spectra is an optical transmission spectrum with respect to the optical components. The optical transmission spectra may have spatial randomness with respect to the pixels. This makes it possible to accurately generate the reconstruction image signals of the components from the first compressed image signal in accordance with the spatially random optical transmission spectra.

The randomness is not limited to complete randomness. For example, the optical transmission spectra having spatial randomness with respect to the pixels may have locally identical patterns. The randomness may be pseudo-randomness.

Note that, for example, optical transmission spectra for pixels of an RGB filter for generating an RGB image signal have periodic characteristics. On the other hand, the optical transmission spectra for the pixels of the optical element may have non-periodic characteristics.

Furthermore, for example, the processing circuit 121 may acquire a second compressed image signal having optical signals. The first compressed image signal may be acquired by summing the optical signals of the second compressed image signal for each adjacent pixel group including two or more adjacent pixels. This makes it possible to acquire the first compressed image signal by using calculation of summing the optical signals of the second compressed image signal for each adjacent pixel group. Therefore, it is possible to flexibly control the summing.

Furthermore, for example, the processing circuit 121 may switch between a first mode in which the first reconstruction image signal group is generated from the first compressed image signal and a second mode in which a second reconstruction image signal group is generated from the second compressed image signal having optical signals. This makes it possible to adaptively switch between the first mode in which reconstruction from the first compressed image signal in which adjacent pixels are unified is performed and the second mode in which reconstruction from the second compressed image signal in which adjacent pixels are not unified is performed.

Furthermore, for example, the processing circuit 121 may switch between the first mode and the second mode on the basis of a user's operation. This makes it possible to switch, in accordance with a user's intention, between the first mode in which reconstruction from the first compressed image signal in which adjacent pixels are unified is performed and the second mode in which reconstruction from the second compressed image signal in which adjacent pixels are not unified is performed.

Furthermore, for example, the number of pixel signals of each reconstruction image signal of the first reconstruction image signal group may be smaller than the number of pixel signals of each reconstruction image signal of the second reconstruction image signal group. This makes it possible to reduce a calculation amount in the first mode in which reconstruction from the first compressed image signal in which adjacent pixels are unified is performed, as compared with the second mode in which reconstruction from the second compressed image signal in which adjacent pixels are not unified is performed.

Furthermore, for example, the number of pixel signals of each reconstruction image signal of the first reconstruction image signal group may be smaller than the number of pixels. This makes it possible to efficiently generate the reconstruction image signals of the components from the first compressed image signal while reducing the calculation amount.

Furthermore, for example, the number of pixel signals of each reconstruction image signal of the first reconstruction image signal group may be identical to the number of pixel signals of the first compressed image signal. This makes it possible to generate reconstruction image signals having the same resolution as the resolution of the first compressed image signal. That is, it is possible to generate reconstruction image signals while maintaining resolution.

Furthermore, for example, the first transmittance information may have, as information, a smaller number of optical transmittances than optical transmittances that correspond to the pixels for each of the optical components. This makes it possible to efficiently generate the reconstruction image signal of the components from the first compressed image signal while reducing a calculation amount.

Furthermore, for example, the optical components may be polarization directions. This makes it possible to separate reconstruction image signals of polarization directions with high precision. That is, it is possible to increase sensitivity and maintain polarization angle resolution while reducing parallax.

Furthermore, for example, the first compressed image signal may be obtained by summing the optical signals for each adjacent pixel group including two or more adjacent pixels and performing an averaging process. This makes it possible to improve an SN ratio and increase effective sensitivity of an image sensor while reducing parallax that occurs in an image.

The SN ratio represents a ratio of a target signal to noise, and a higher SN ratio indicates that less noise is present and that a better observation result is obtained. For example, the signal can be a true value of a pixel value of each pixel of an acquired image, and the noise can be a deviation amount from the true value of the pixel value. Although it is difficult to directly observe the true value of the pixel value, it is possible to calculate the true value of the pixel value and a deviation amount from the true value in each image, for example, by successively taking images of a stationary subject and calculating a time average of pixel values in each pixel.

For each of the optical components, the optical transmittances may correspond to the pixels on a one-to-one basis or need not correspond to the pixels on a one-to-one basis. For example, two or more optical transmittances may correspond to one pixel or two or more pixels may correspond to one optical transmittance.

Furthermore, for example, the optical transmittances may be non-uniform. Such non-uniform optical transmittances are effective for generation of a reconstruction image signal. The optical transmittances may be regarded as being non-uniform in a case where the optical transmittances include at least two optical transmittances that are different from each other. Furthermore, for example, the optical transmittances may have randomness.

Furthermore, for example, the transmittance information may correspond to the mask data. That is, the first transmittance information may correspond to first mask data. The second transmittance information may correspond to second mask data. Alternatively, the transmittance information may be expressed as optical transmittance information or encoding information. That is, the first transmittance information may be expressed as first optical transmittance information or first encoding information, and the second transmittance information may be expressed as second optical transmittance information or second encoding information.

In another example, the image sensor 111 of the imaging device 110 may detect optical signals that correspond to the pixels through an optical element having optical transmission spectra that correspond to the pixels. Then, the processing circuit 121 of the image processing device 120 may acquire the first compressed image signal. In the first compressed image signal, the optical signals detected by the image sensor 111 are summed for each adjacent pixel group. Each adjacent pixel group includes two or more adjacent pixels among the pixels.

The processing circuit 121 of the image processing device 120 may generate, from the first compressed image signal, a first reconstruction image signal group having reconstruction image signals that correspond to wavelength bands in accordance with information concerning the optical transmission spectra.

This makes it possible to generate the reconstruction image signals of the wavelength bands from the first compressed image signal in which the optical signals are summed for each adjacent pixel group in accordance with the information concerning the optical transmission spectra. That is, it is possible to sum adjacent pixels and separate the reconstruction image signals of the wavelength bands. Therefore, it is possible to increase effective sensor sensitivity while reducing parallax that occurs in an image.

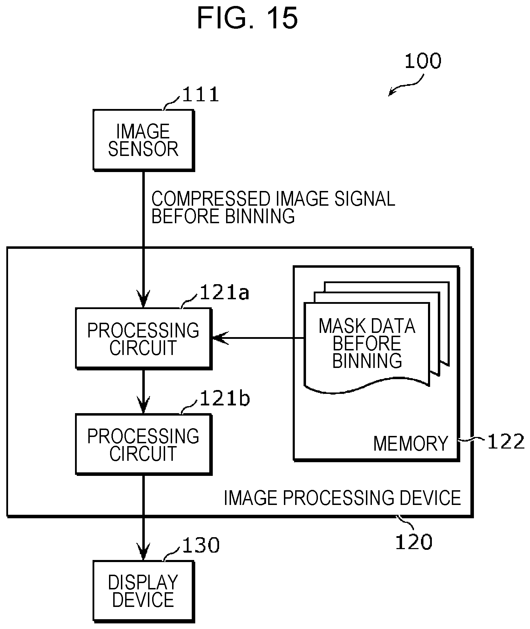

Fig. 15 is a block diagram illustrating a first specific example of the configuration of the image processing system 100 illustrated in Fig. 7. In the example of Fig. 15, the image processing system 100 includes the image sensor 111, the image processing device 120, and the display device 130. The image processing device 120 includes processing circuits 121a and 121b and a memory 122.

The image sensor 111, the image processing device 120, and the display device 130 of Fig. 15 correspond to the image sensor 111, the image processing device 120, and the display device 130 of Fig. 7. The processing circuits 121a and 121b of Fig. 15 correspond to the processing circuit 121 of Fig. 7. The processing circuits 121a and 121b may be unified into one processing circuit.

The memory 122 is a storage element for storing information. The memory 122 may be a volatile memory or may be a non-volatile memory. In this example, mask data before binning, that is, mask data on which binning has not been performed is stored in the memory 122.

For example, the image sensor 111 detects optical signals that correspond to pixels through an optical element that corresponds to the optical system 113, the filter array 112, and the like illustrated in Fig. 8. The optical signals detected by the image sensor 111 constitute a compressed image signal in which pieces of information on wavelength bands are superimposed. In this example, the compressed image signal including the optical signals detected by the image sensor 111 is a compressed image signal before binning, that is, a compressed image signal on which binning has not been performed.

The processing circuit 121a acquires the compressed image signal before binning from the image sensor 111. That is, the compressed image signal before binning is transmitted from the image sensor 111 to the processing circuit 121a. Furthermore, the processing circuit 121a acquires the mask data before binning from the memory 122. That is, the mask data before binning is transmitted from the memory 122 to the processing circuit 121a.

The processing circuit 121a performs binning on the compressed image signal and mask data. That is, the processing circuit 121a unifies adjacent pixels of the compressed image signal for each adjacent pixel group and unifies adjacent pixels of the mask data for each adjacent pixel group.

For example, the number of pixels of the compressed image signal before binning is A (A is a natural number), the number of pixels of the compressed image signal after binning may be C (C is a natural number smaller than A). In a case where the number of pixels of the mask data before binning is B (B is a natural number), the number of pixels of the mask data after binning, that is, the mask data on which binning has been performed may be C (C is a natural number smaller than B).

The number of pixels of an image signal is the number of pixels of an image expressed by the image signal and corresponds to the number of pixel signals that constitute the image signal. That is, the number of pixels of a compressed image signal is the number of pixels of a compressed image expressed by a compressed image signal and corresponds to the number of pixel signals that constitute the compressed image signal. The number of pixels of mask data corresponds to the number of transmittances which the mask data has with respect to pixels for each wavelength band.

The number B of pixels of the mask data before binning may be different from the number A of pixels of the compressed image signal before binning or may be identical to the number A of pixels of the compressed image signal before binning. Binning may be performed so that the number C of pixels of the mask data after binning becomes identical to the number C of pixels of the compressed image signal after binning, that is, the compressed image signal on which binning has been performed.

Binning may be performed on a part of the compressed image. Furthermore, binning may be performed on a part of the mask data. For example, the compressed image may have 4K resolution (3840 × 1920), and the mask data may have Full-HD resolution (1920 × 1080). Binning of 2 × 2 pixels may be performed on a central region. By the binning, a compressed image of 640 × 360 pixels and mask data of 640 × 360 pixels of the same size may be generated.

The processing circuit 121b generates reconstruction image signals that correspond to wavelength bands from the compressed image signal after binning in accordance with the mask data after binning.

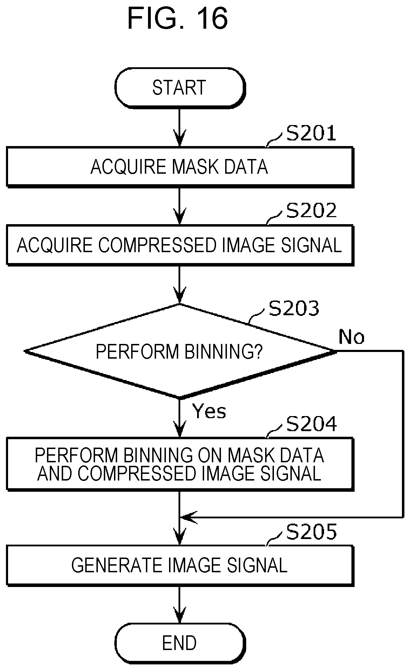

Fig. 16 is a block diagram illustrating a first specific example of the operation of the image processing system 100 illustrated in Fig. 15.

In this example, the processing circuit 121a acquires mask data before binning (S201). Furthermore, the processing circuit 121a acquires a compressed image signal before binning (S202). These processes may be performed in a reverse order or may be performed in parallel.

Then, the processing circuit 121a determines whether or not binning is performed (S203). For example, a mode in which binning is performed and a mode in which binning is not performed may be switched by a user's operation. Specifically, the processing circuit 121a may acquire a mode selected by the user via an input device or the like (not illustrated). Then, the processing circuit 121a may determine whether or not binning is performed in accordance with the selected mode.

The processing circuit 121a may determine whether or not binning is performed on the basis of brightness of an imaged subject. Specifically, the processing circuit 121a may determine whether or not binning is performed on the basis of brightness of the subject indicated by the compressed image signal, that is, luminance values of the pixels. For example, in a case where the imaged subject is dark, the processing circuit 121a determines that binning is performed.

More specifically, the processing circuit 121a may determine that binning is performed in a case where an average luminance value of the whole compressed image expressed by the compressed image signal is equal to or less than a threshold value. Alternatively, the processing circuit 121a may determine that binning is performed in a case where an average luminance value of pixels included in top P percents (P is a constant) in terms of brightness among the pixels of the compressed image expressed by the compressed image signal is equal to or less than a threshold value.

The processing circuit 121a may determine whether or not binning is performed on the basis of a condition concerning the number of pixels. For example, the processing circuit 121a may determine that binning is performed to reduce a processing delay in a case where the number of pixels of the compressed image signal, that is, the number of pixel signals included in the compressed image signal is equal to or greater than a threshold value.

In a case where the processing circuit 121a determines that binning is performed (Yes in S203), the processing circuit 121a performs binning on the mask data and the compressed image signal (S204). In this case, the processing circuit 121a performs binning so that the number of pixels of the mask data after binning and the number of pixels of the compressed image signal after binning match each other. The processing circuit 121a skips binning in a case where the processing circuit 121a determines that binning is not performed (No in S203).

Then, the processing circuit 121b generates an image signal (S205). For example, the processing circuit 121b generates reconstruction image signals that correspond to the wavelength bands. In this case, the image signals may be generated on the basis of the mask data and compressed image signal after binning or may be generated on the basis of the mask data and compressed image signal before binning.

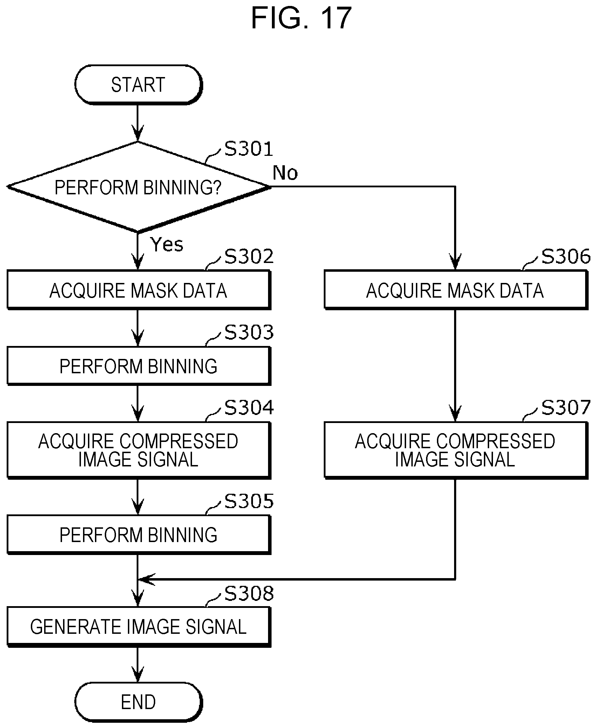

Fig. 17 is a block diagram illustrating a second specific example of the operation of the image processing system 100 illustrated in Fig. 15.

In this example, the processing circuit 121a determines whether or not binning is performed (S301). For example, a mode in which binning is performed and a mode in which binning is not performed may be switched by a user's operation. Specifically, the processing circuit 121a may acquire a mode selected by the user via an input device or the like (not illustrated). Then, the processing circuit 121a may determine whether or not binning is performed in accordance with the selected mode.

In a case where the processing circuit 121a determines that binning is performed (Yes in S301), the processing circuit 121a acquires the mask data (S302) and performs binning on the mask data (S303). Furthermore, the processing circuit 121a acquires the compressed image signal (S304) and performs binning on the compressed image signal (S305).

In a case where the processing circuit 121a determines that binning is not performed (No in S301), the processing circuit 121a acquires the mask data (S306) and acquires the compressed image signal (S307). In this case, binning is not performed.

Then, the processing circuit 121b generates an image signal (S308). For example, the processing circuit 121b generates reconstruction image signals that correspond to wavelength bands. In this case, the image signals may be generated on the basis of the mask data and compressed image signal after binning or may be generated on the basis of the mask data and compressed image signal before binning.

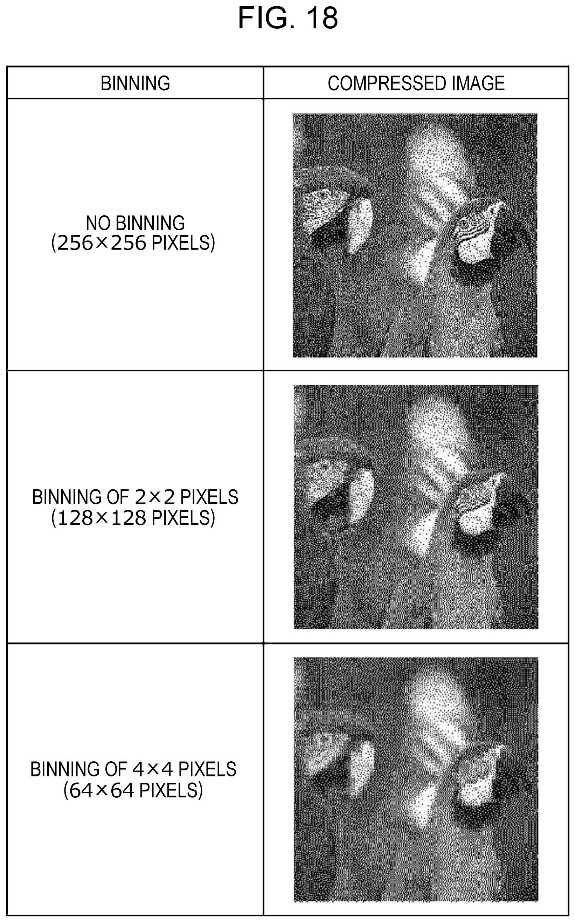

Fig. 18 is an explanatory view illustrating binning of a compressed image signal according to the embodiment. In Fig. 18, a compressed image is illustrated at each execution level of binning.

The upper stage of Fig. 18 illustrates a compressed image obtained in a case where binning is not performed. The middle stage of Fig. 18 illustrates a compressed image obtained in a case where 2 × 2 pixels are unified by binning. The lower stage of Fig. 18 illustrates a compressed image obtained in a case where 4 × 4 pixels are unified by binning.

A range of adjacent pixels to be unified increases in an order of no binning, binning of 2 × 2 pixels, and binning of 4 × 4 pixels. Accordingly, resolution of the compressed image decreases in an order of 256 × 256 pixels, 128 × 128 pixels, and 64 × 64 pixels, and the compressed image is gradually blurred.

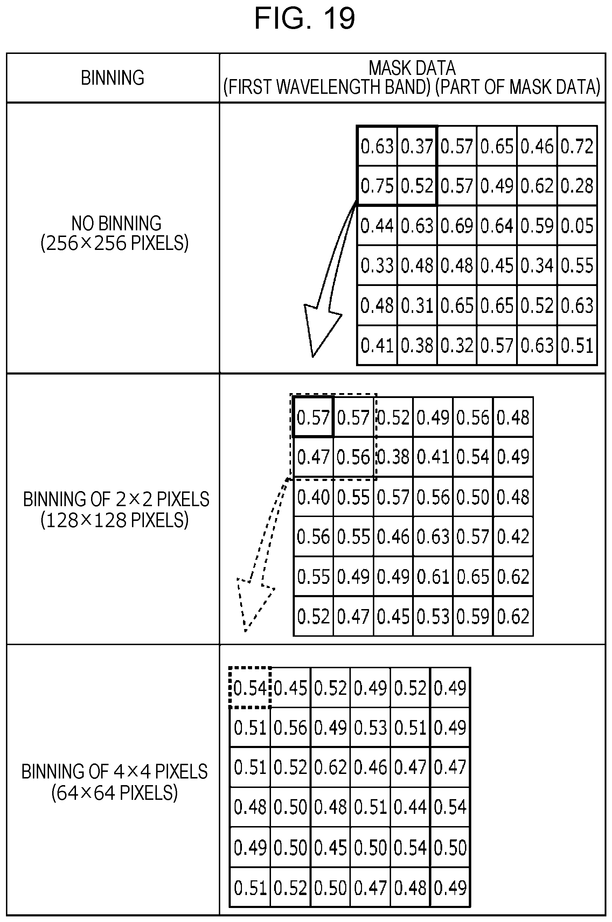

Fig. 19 is an explanatory view illustrating binning of mask data according to the embodiment. The mask data is also subjected to binning. For example, without binning, four transmittances that correspond to upper left four pixels are 0.63, 0.37, 0.75, and 0.52. These four transmittances are unified into one transmittance by binning of 2 × 2 pixels. For example, these four transmittances are unified into one transmittance of 0.57, which is an average of these four transmittances. The unified transmittance can be used for reconstruction processing.

In a result of the binning of 2 × 2 pixels, four transmittances that correspond to upper left four pixels are 0.57, 0.57, 0.47, and 0.56. These four transmittances are unified into one transmittance by binning of 4 × 4 pixels. For example, these four transmittances are unified into one transmittance of 0.54, which is an average of these four transmittances. The unified transmittance can be used for reconstruction processing.

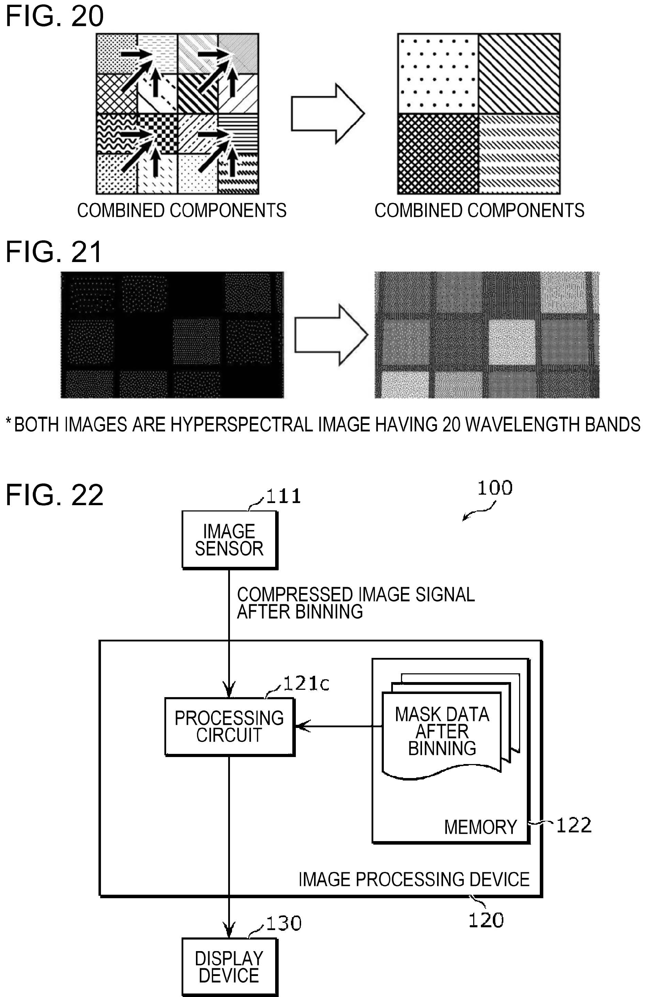

Fig. 20 is a conceptual diagram illustrating binning according to the embodiment. For example, in a case where compressed sensing is used, component values of optical signals are combined in accordance with transmittances for components and are detected as a combined component value for each pixel. These combined component values can be separated into component values by using mask data indicating transmittances for the components.

As illustrated in Fig. 20, even in a case where the combined component values that correspond to the pixels are unified for each adjacent pixel group, the combined component value after the unification can be separated into component values by using mask data unified for each adjacent pixel group. For example, a reconstruction image signal having the same number of pixels as the compressed image signal after binning can be generated for each wavelength band. It is therefore possible to unify adjacent pixels. Therefore, it is possible to perform binning while reducing parallax.

Fig. 21 is an illustrative view illustrating reconstruction images according to the embodiment. The left side of Fig. 21 illustrates a hyperspectral image that corresponds to the reconstruction images in a case where binning is not performed. The right side of Fig. 21 illustrates a hyperspectral image that corresponds to the reconstruction images in a case where binning is performed. Specifically, both of the left side of Fig. 21 and the right side of Fig. 21 illustrate, as a hyperspectral image that corresponds to the reconstruction images, a composite image of 20 spectral images that constitute a hyperspectral image having 20 wavelength bands.

In this example, four optical signals that correspond to four pixels are summed by binning of 2 × 2 pixels, and brightness becomes four times higher. The resolution is halved in both vertical and horizontal directions. That is, the number of pixels becomes 1/4.

In this example, in the binning, the optical signals are summed. In the binning, an averaging process may be further performed. That is, an average of optical signals may be output by dividing a signal value obtained by summing the optical signals by the number of optical signals. Also in this case, an SN ratio is improved, and effective sensor sensitivity improves.

Fig. 22 is a block diagram illustrating a second specific example of the configuration of the image processing system 100 illustrated in Fig. 7. In the example of Fig. 22, the image processing device 120 includes a processing circuit 121c instead of the processing circuits 121a and 121b, as compared with the example of Fig. 15. In the memory 122, mask data after binning is stored.

For example, the image sensor 111 detects optical signals that correspond to pixels through an optical element that corresponds to the optical system 113, the filter array 112, and the like illustrated in Fig. 8. The optical signals detected by the image sensor 111 constitute a compressed image signal in which pieces of information on wavelength bands are superimposed. In this example, the image sensor 111 performs binning on the compressed image signal. That is, the image sensor 111 sums the optical signals that correspond to the pixels for each adjacent pixel group.

The processing circuit 121c acquires the compressed image signal after binning from the image sensor 111. That is, the compressed image signal after binning is transmitted from the image sensor 111 to the processing circuit 121c. Furthermore, the processing circuit 121c acquires mask data after binning from the memory 122. That is, the mask data after binning is transmitted from the memory 122 to the processing circuit 121c.

For example, the number of pixels of the mask data after binning is C, and the number of pixels of the compressed image signal after binning is C. That is, the processing circuit 121c acquires the mask data and the compressed image signal that correspond to the same number of pixels.

The processing circuit 121c generates reconstruction image signals that correspond to wavelength bands from the compressed image signal after binning in accordance with the mask data after binning.

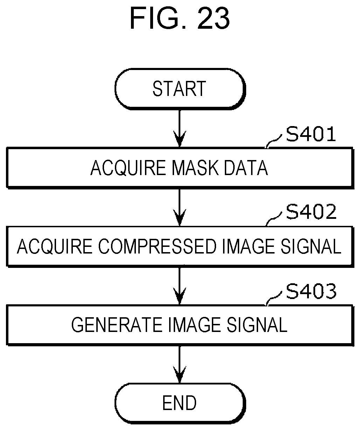

Fig. 23 is a block diagram illustrating a specific example of the operation of the image processing system 100 illustrated in Fig. 22.

In this example, the processing circuit 121c acquires mask data after binning (S401). Furthermore, the processing circuit 121c acquires a compressed image signal after binning (S402). These processes may be performed in a reverse order or may be performed in parallel.

Then, the processing circuit 121c generates an image signal on the basis of the mask data and compressed image signal after binning (S403). For example, the processing circuit 121c generates reconstruction image signals that correspond to wavelength bands.

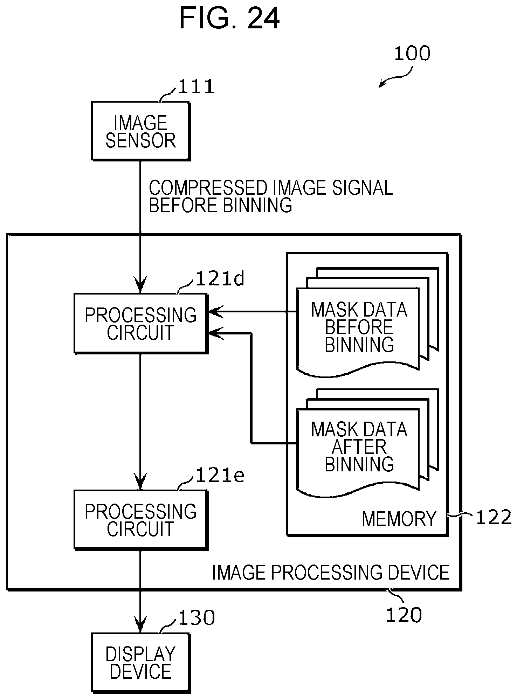

Fig. 24 is a block diagram illustrating a third specific example of the configuration of the image processing system 100 illustrated in Fig. 7. In the example of Fig. 24, the image processing device 120 includes processing circuits 121d and 121e instead of the processing circuits 121a and 121b, as compared with the example of Fig. 15. The processing circuits 121d and 121e may be unified into one processing circuit. In the memory 122, mask data before binning and mask data after binning are stored.

For example, the image sensor 111 detects optical signals that correspond to pixels through an optical element that corresponds to the optical system 113, the filter array 112, and the like illustrated in Fig. 8. The optical signals detected by the image sensor 111 constitute a compressed image signal in which pieces of information on wavelength bands are superimposed. In this example, the compressed image signal constituted by the optical signals detected by the image sensor 111 is a compressed image signal before binning, that is, a compressed image signal on which binning has not been performed.

The processing circuit 121d acquires the compressed image signal before binning from the image sensor 111. That is, the compressed image signal before binning is transmitted from the image sensor 111 to the processing circuit 121d. Furthermore, the processing circuit 121d acquires the mask data before binning from the memory 122. That is, the mask data before binning is transmitted from the memory 122 to the processing circuit 121d.

Then, the processing circuit 121d performs binning on the compressed image signal. That is, the processing circuit 121d unifies adjacent pixels of the compressed image signal for each adjacent pixel group. Furthermore, the processing circuit 121d acquires the mask data after binning from the memory 122. That is, the mask data after binning is transmitted from the memory 122 to the processing circuit 121d.

For example, the number of pixels of the mask data after binning is C, and the number of pixels of the compressed image signal after binning is C. That is, the processing circuit 121d acquires the mask data and the compressed image signal that correspond to the same number of pixels.

The processing circuit 121e generates reconstruction image signals that correspond to the wavelength bands from the compressed image signal after binning in accordance with the mask data after binning.

Alternatively, the processing circuit 121d need not perform binning on the compressed image signal. In this case, the processing circuit 121d acquires the mask data before binning from the memory 122. That is, the mask data before binning is transmitted from the memory 122 to the processing circuit 121d. In this case, the number B of pixels of the mask data before binning is identical to the number A of pixels of the compressed image signal before binning.

Then, the processing circuit 121e generates reconstruction image signals that correspond to the wavelength bands from the compressed image signal before binning in accordance with the mask data before binning.

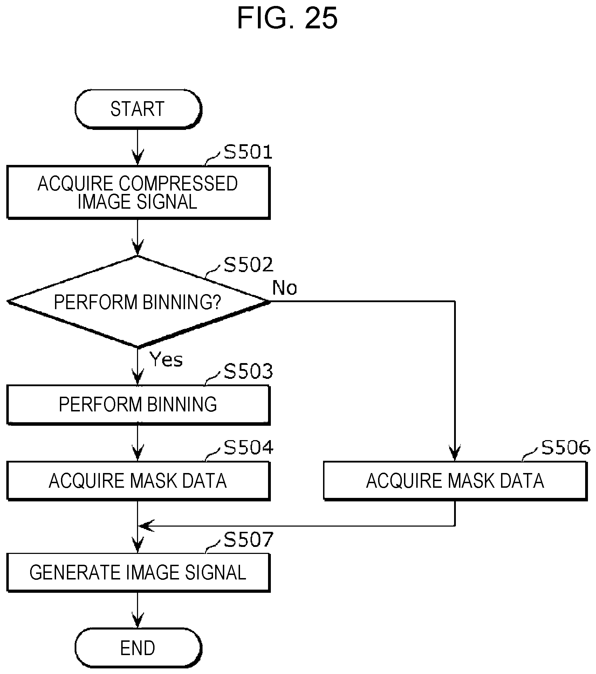

Fig. 25 is a block diagram illustrating a specific example of the operation of the image processing system 100 illustrated in Fig. 24.

In this example, the processing circuit 121d acquires a compressed image signal before binning (S501). Then, the processing circuit 121d determines whether or not binning is performed (S502), as in the determination process (S203) of Fig. 16.

In a case where the processing circuit 121d determines that binning is performed (Yes in S502), the processing circuit 121d performs binning on the compressed image signal (S503). The processing circuit 121d acquires mask data after binning (S504). In a case where the processing circuit 121d determines that binning is not performed (No in S502), the processing circuit 121d acquires mask data before binning (S506).

Then, the processing circuit 121e generates an image signal (S507). For example, the processing circuit 121e generates reconstruction image signals that correspond to wavelength bands. In this case, the image signals may be generated on the basis of the mask data and compressed image signal after binning or may be generated on the basis of the mask data and compressed image signal before binning.

This makes it possible to switch whether or not to perform binning while reducing a processing load related to binning of mask data. In the memory 122, pairs of mask data may be stored on the basis of execution levels of binning. One pair of mask data may be selected and acquired from the memory 122 on the basis of an execution level of binning.

The present disclosure is effective not only for reconstruction of a hyperspectral image, but also for reconstruction of an image expressed by three wavelength bands such as an RGB image and reconstruction of an image expressed by two wavelength bands. In the above examples, basically, a compressed image signal in which pieces of information on wavelength bands are superimposed is used. Instead of this, a compressed image signal in which pieces of information on polarization directions are superimposed may be used.

For example, the n × m filters F₁₁, ..., and Fₙₘ of the filter array 112 illustrated in Fig. 8 may have n × m × w transmittances in w polarization directions instead of the w wavelength bands. The image sensor 111 may acquire a compressed image signal in which pieces of information on the w polarization directions are superimposed by detecting optical signals that correspond to pixels through the filter array 112. Then, the processing circuit 121 may generate w reconstruction image signals that correspond to the w polarization directions from the compressed image signal by the reconstruction calculation described above.

Non Patent Literatures 1 to 3 describe examples of application of a polarization filter. Such polarization filters may be applied to the present disclosure.

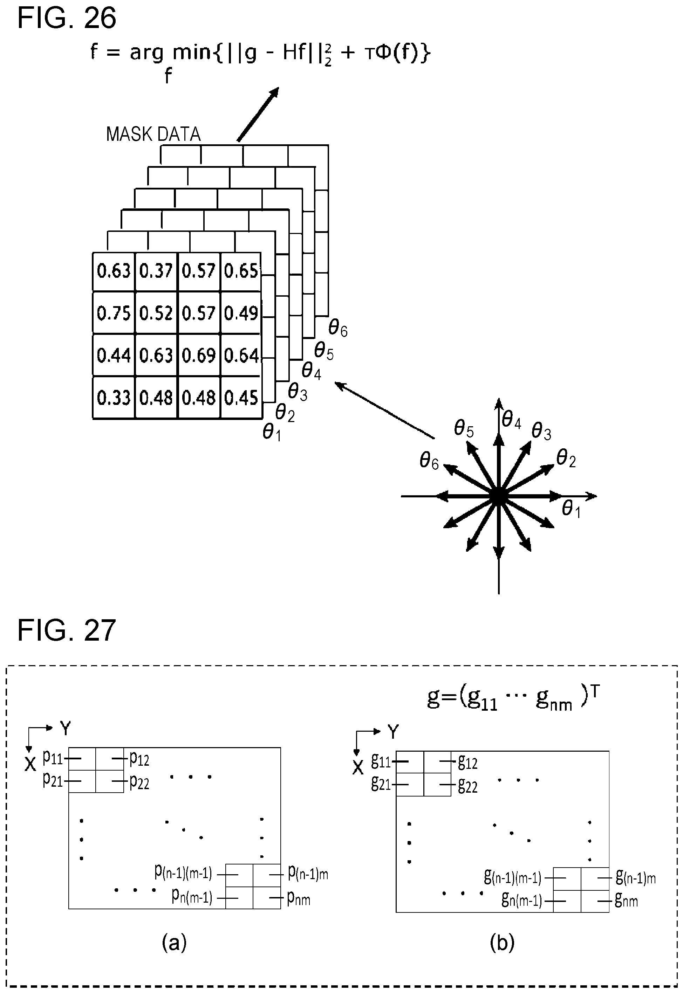

Fig. 26 is a conceptual diagram illustrating a method for generating reconstruction image signals that correspond to polarization directions according to the embodiment. To generate the reconstruction image signals, mask data having transmittances that correspond to pixels for each of polarization directions instead of wavelength bands is used.

The mask data is obtained by measuring transmittance for each pixel and for each polarization direction. For example, transmittances that correspond to pixels may be measured while shifting a polarization direction in a specific direction from one reference direction by a certain angle. Specifically, transmittances that correspond to pixels may be measured for each polarization direction by attaching a rotatable polarization filter to a camera lens and imaging a reference white plate while rotating the polarization filter.

Signal values measured by imaging the reference white plate for each polarization direction may be used as it is as mask data corresponding to transmittances. Alternatively, values of mask data may be derived by dividing signal values measured with a polarization filter by signal values measured without a polarization filter.

The mask data having transmittances that correspond to pixels for each of polarization directions is reflected in the matrix H and is used in the above formula (2). This makes it possible to calculate reconstruction image signals that correspond to the polarization directions from compressed image signals. For example, reconstruction images obtained based on the polarization directions can be used, for example, for surface inspection of a member having high reflectance.

For example, the processing circuit 121 of the image processing system 100 illustrated in Fig. 7 may perform binning in reconstruction of reconstruction image signals that correspond to polarization directions, as in the case of the wavelength bands. The image processing system 100 can thereby increase effective sensor sensitivity while reducing parallax that occurs in an image.

As described above, the image processing system 100 according to the present disclosure can increase effective sensor sensitivity while reducing parallax that occurs in an image in reconstruction of images that correspond to components.

Regarding this, Patent Literature 1 describes a compressed sensing method including binning. According to this method, a compressed image is acquired by measuring a weighted sum of luminance levels for each constituent unit having pixels instead of reading out a luminance level of each pixel. That is, a compressed image whose number of pixels has been reduced by binning is generated. Then, an image corresponding to an original image before binning is generated from the compressed image on the basis of a weight coefficient and sparsity.

On the other hand, components of light are not considered in Patent Literature 1. For example, in a case where values of components are detected by adjacent pixels and the values detected by the adjacent pixels are summed as illustrated in Fig. 2, it is difficult to derive an original image from a compressed image since there is no sparsity among the components. Furthermore, in a case where values detected by pixels that are not adjacent are summed as illustrated in Fig. 1, parallax occurs.

Therefore, even according to the disclosure of Patent Literature 1, it is not easy to increase sensitivity while reducing parallax in construction of images that correspond to components. Furthermore, in Patent Literature 1, it is assumed that the number of pixels of a reconstruction image is identical to the number of pixels of an original image before binning and is larger than the number of pixels of a compressed image. Therefore, it is assumed that brightness of the reconstruction image is not improved and effective sensor sensitivity is not improved.

On the other hand, in the image processing system 100 according to the present disclosure, a signal in which components are combined is detected for each pixel. It is possible to separate signals that correspond to components from the detected signal in accordance with transmittances of the components. Furthermore, it is possible to generate reconstruction image signals that correspond to components with increased sensitivity while reducing parallax by performing binning of adjacent pixels on both of a compressed image signal and mask data.

Note that the image processing system 100 according to the present disclosure may acquire a compressed image signal and mask data after binning and generate reconstruction image signals that correspond to components by using the compressed image signal and mask data after binning. Even according to such an aspect, it is possible to generate reconstruction image signals that correspond to components with increased sensitivity while reducing parallax.

Furthermore, in the image processing system 100 according to the present disclosure, the number of pixels of a reconstruction image signal is identical to the number of pixels of a compressed image signal after binning and is smaller than the number of pixels of a compressed image signal before binning (in other words, the number of pixels at a time of detection of optical signals). Therefore, it is possible to reduce a calculation amount of reconstruction calculation and generate a reconstruction image having a small data size.

Although an image processing system and others have been described above in accordance with the embodiment, aspects of the image processing system and others are not limited to the embodiment. The embodiment may be modified in ways that may be conceived by those skilled in the art, and the constituent elements in the embodiment may be combined in any ways.

For example, a process described as being executed by a particular constituent element in the embodiment may be performed by another constituent element instead of the particular constituent element. The order of processes may be changed, and the processes may be performed in parallel. Furthermore, ordinal numbers such as "first" and "second" used in the description may be replaced, removed, or newly added as appropriate. These ordinal numbers do not necessarily correspond to any meaningful order and may be used merely for identifying elements.

Furthermore, for example, an expression "at least one of a first element, a second element, or a third element" corresponds to the first element, the second element, the third element, or any combination thereof.

A method including steps performed by the constituent elements of the image processing system or the like may be performed by any system or device. That is, this method may be performed by the above image processing system or the like or may be performed by another system or device.

For example, part or all of the method may be performed by a computer including a processor, a memory, an input/output circuit, and the like. In this case, the method may be performed by causing the computer to execute a program for performing the method.

For example, the program causes a computer to perform an image processing method including detecting optical signals that correspond to pixels through an optical element having, for each of optical components, optical transmittances that correspond to the pixels; acquiring a first compressed image signal obtained by summing the optical signals for each adjacent pixel group including two or more adjacent pixels among the pixels; and generating a first reconstruction image signal group having reconstruction image signals that correspond to the optical components from the first compressed image signal in accordance with first transmittance information concerning the optical transmittances.

For example, the program may cause a computer to perform an image processing method including detecting optical signals that correspond to pixels through an optical element having optical transmission spectra that correspond to the pixels; acquiring a first compressed image signal obtained by summing the optical signals for each adjacent pixel group including two or more adjacent pixels among the pixels; and generating a first reconstruction image signal group having reconstruction image signals that correspond to wavelength bands from the first compressed image signal in accordance with information concerning the optical transmission spectra.

The above program may be recorded on a non-transitory computer-readable storage medium such as a CD-ROM.

Each of the constituent elements of the image processing system and others may be configured using dedicated hardware or may be configured using general-purpose hardware that executes the above program or the like or may be configured using a combination of these. The general-purpose hardware may include a memory on which a program is recorded and a general-purpose processor that reads out the program from the memory and executes the program. The memory may be a semiconductor memory, a hard disk, or the like, and the general-purpose processor may be a CPU or the like.

The dedicated hardware may include a memory and a dedicated processor. For example, the dedicated processor may perform the above method by referring to the memory.

Each of the constituent elements of the image processing system and others may be an electric circuit. These electric circuits may constitute a single electric circuit as a whole or may be different electric circuits. These electric circuits may correspond to the dedicated hardware or may correspond to the general-purpose hardware that execute the above program or the like.

### (Other Remarks)

A modification of the embodiment may be as follows.

A device in which
the device includes a circuit,
the circuit receives first information,
the circuit generates one or more images on the basis of the first information and second information,
the circuit outputs the one or more images,
an image sensor including pixels is capable of ("capable of" may be described as "configured to") outputting the first information after receiving first light from a filter array including four or more filters that are different from each other in transmission spectrum in a wavelength range,
the first information is pixel values output by the pixels,
the circuit is capable of generating an image I1₁ that corresponds to a wavelength band W1 included in the wavelength range, ..., and an image I1_{w} that corresponds to a wavelength band Ww included in the wavelength range on the basis of the first information and third information,
the third information is a matrix H = [H1 ... Hw] having (n × m) rows and (n × m × w) columns,
each of H1, ..., and Hw is a submatrix of H,
each of H1, ..., and Hw is a diagonal matrix having (n × m) rows and (n × m) columns,
the circuit is capable of generating an image I2₁ that corresponds to the wavelength band W1 included in the wavelength range, ..., and an image I2_{w} that corresponds to the wavelength band Ww included in the wavelength range on the basis of the first information and the second information,
the image I2₁, ..., and the image I2_{w} include the one or more images,
P pixels included in the image I1₁ correspond to one pixel included in the image I2₁, ..., and P pixels included in the image I1_{w} correspond to one pixel included in the image I2_{w},
the second information is a matrix Hr = [Hr1 ... Hrw] having ((n × m)/d) rows and ((n × m × w)/d) columns, and
the matrix Hr1 is a diagonal matrix having ((n × m)/d) rows and ((n × m)/d) columns generated on the basis of the diagonal matrix H1, ..., and the matrix Hrw is a diagonal matrix having ((n × m)/d) rows and ((n × m)/d) columns generated on the basis of the diagonal matrix Hw.

d may be 2.

d may be 4.

### (Description of Modification of Embodiment)

The device may be the image processing device 120.

The circuit may be the processing circuit 121.

The filter array may be the filter array 112.

The image sensor may be the image sensor 111.

Fig. 27 illustrates pixels arranged in a matrix that are included in an image sensor and pixel values output by the pixels.

Fig. 27(a) illustrates a pixel p11, ..., and a pixel pnm arranged in a matrix included in the image sensor.

Fig. 27(b) shows that the pixel p₁₁ outputs a pixel value g₁₁, ..., and the pixel pₙₘ outputs a pixel value gₙₘ.

The first information is g = (g₁₁ ... gₙₘ)^{T}.

The third information may be a matrix H.

The matrix H may be H = [H1 ... Hw], and each of H1, ..., and Hw may be a diagonal matrix including (n × m) diagonal components. That is, each of H1, ..., and Hw may be [Math 4.] $\begin{matrix}H 1 = \left[\begin{matrix}h 1 \left(11\right) & & & 0 \\ & h 1 \left(22\right) & & \\ & & ⋱ & \\ 0 & & & h 1 \left(\left(n\times m\right)\left(n\times m\right)\right)\end{matrix}\right] \\ ⋯ \\ Hw = \left[\begin{matrix}hw \left(11\right) & & & 0 \\ & hw \left(22\right) & & \\ & & ⋱ & \\ 0 & & & hw \left(\left(n\times m\right)\left(n\times m\right)\right)\end{matrix}\right]\end{matrix}$

The circuit can generate f1 = (f11 ... f1w)^{T} on the basis of the formula 1, specifically, g = (g11 ... gnm)^{T} = [H1 ... Hw]f1. This generation method has been described in the section related to the formula 1 and formula 2. Note that f11 = (f11₁₁ ... f11ₙₘ)^{T}, ..., and f1w = (f1w₁₁ ... f1wₙₘ)^{T}.

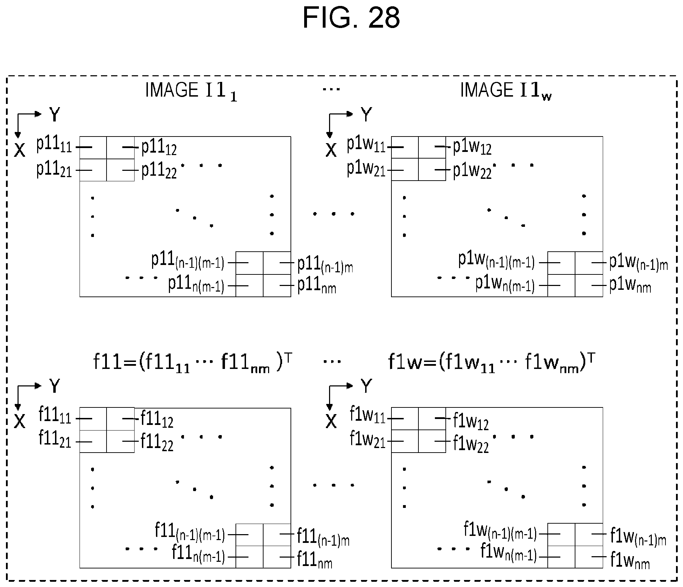

Fig. 28 illustrates the image I1₁, ..., and the image I1_{w}.

The image I1₁ includes a pixel p11₁₁ having a pixel value f11₁₁, ..., and a pixel p11ₙₘ having a pixel value f11ₙₘ, ..., and the image I1_{w} includes a pixel p1w₁₁ having a pixel value f1w₁₁, ..., and a pixel p1wₙₘ₁ having a pixel value f1wₙₘ.

The circuit may receive an instruction as to how many pixels are to be included in each of the image I2₁, ..., and the image I2_{w}, that is, pixel number information for specifying (n/d) × (m/d). d may be an integer equal to or greater than 2. The following describes, as an example, a case where d = 2.

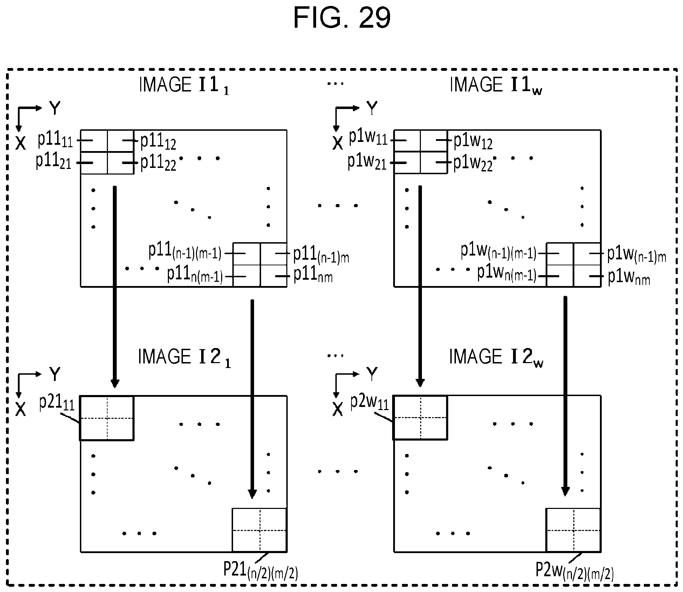

Fig. 29 shows that the circuit can convert the image I1₁ into the image I2₁, ..., and convert the image I1_{w} into the image I2_{w}.

The image I1₁, ..., and the image I1_{w} each includes n × m pixels.

The image I2₁, ..., and the image I2_{w} each includes (n/d) × (m/d) pixels. Note that d = 2. The circuit may receive information for specifying d from a user via an input device.

In Fig. 29, four pixels are converted into one pixel.

A pixel p11₁₁, a pixel p11₁₂, a pixel p11₂₁, and a pixel p11₂₂ included in the image I1₁ are converted into a pixel p21₁₁ included in the image I2₁, ..., and a pixel p11_{(n - 1)(m - 1)}, a pixel p11_{(n - 1)m}, a pixel p11_{n(m - 1)}, and a pixel p11ₙₘ included in the image I1₁ are converted into a pixel p21_{(n/2)(m/2)} included in the image I2₁.

...
A pixel p1w₁₁, a pixel p1w₁₂, p1w₂₁, and a pixel p1_{w22} included in the image I1_{w} are converted into a pixel p21₁₁ included in the image I2_{w}, ..., and a pixel p11_{(n - 1)(m - 1)}, a pixel p11_{(n - 1)m}, a pixel p11_{n(m - 1)}, and a pixel p11ₙₘ included in the image I1_{w} is converted into a pixel p21_{(n/2)(m/2)} included in the image I2_{w}.

The second information may be a matrix Hr = [Hr1 ...Hrw]. The circuit may generate the second information on the basis of the third information. The second information Hr = [Hr1 ... Hrw] generated from the third information H = [H1 ... Hw] is illustrated below. Each of Hr1, ..., and Hrw is a diagonal matrix.

The diagonal matrix H1 includes
a component h1(11) that corresponds to the pixel p11₁₁,
a component h1(22) that corresponds to the pixel p11₁₂, ...,
a component h1((m + 1)(m + 1)) that corresponds to the pixel p11₂₁,
a component h1((m + 2)(m + 2)) that corresponds to the pixel p11₂₂, ...,
a component h1(((n - 2) × m + (m - 1))((n - 2) × m + (m - 1))) that corresponds to the pixel p11_{(n - 1)(m - 1)},
a component h1(((n - 2) × m + m)((n - 2) × m + m)) that corresponds to the pixel p11_{(n - 1)m}, ...,
a component h1(((n - 1) × m + (m - 1))((n - 1) × m + (m - 1))) that corresponds to the pixel p11_{n(m - 1)}, and
a component h1(((n - 1) × m + m)((n - 1) × m + m)) = h1((n × m)(n × m)) that corresponds to the pixel p11ₙₘ.

The diagonal matrix Hr1 includes
a component hr(11) = (h1(11) + h1(22) + h1((m + 1)(m + 1)) + h1((m + 2)(m + 2)))/4 that corresponds to the pixel p21₁₁, ..., and
a component hr(((n/2) × (m/2))((n/2) × (m/2)) = (h1(((n - 2) × m + (m - 1))((n - 2) × m + (m - 1))) + h1(((n - 2) × m + m)((n - 2) × m + m)) + h1(((n - 1) × m + (m - 1))((n - 1) × m + (m - 1))) + h1((n × m)(n × m)))/4 that corresponds to the pixel p21_{(n/2)(m/2)}.

That is, ((n/d) × (m/d)) diagonal components included in the diagonal matrix Hr1 can be expressed by using (n × m) diagonal components included in the diagonal matrix H1.

Similarly, ((n/d) × (m/d)) diagonal components included in the diagonal matrix Hr2 can be expressed by using (n × m) diagonal components included in the diagonal matrix H2, ..., and ((n/d) × (m/d)) diagonal components included in the diagonal matrix Hrw can be expressed by using (n × m) diagonal components included in the diagonal matrix Hw.

The circuit generates fourth information g1 = (g1₁₁ ... g1_{(n/d)(m/d)})^{T} on the basis of the information for specifying d and the first information g = (g₁₁ ... gₙₘ)^{T}. In the following description, it is assumed that d = 2.

A pixel value g1₁₁ is determined on the basis of the pixel value g₁₁ output from the pixel p₁₁ included in the image sensor, the pixel value g₁₂ output from the pixel p₁₂ included in the image sensor, the pixel value g₂₁ output from the pixel p₂₁ included in the image sensor, and the pixel value g₂₂ output from the pixel p₂₂ included in the image sensor, ..., and a pixel value g1_{(n/d)(m/d)} is determined on the basis of a pixel value g_{(n - 1)(m - 1)} output from a pixel p_{(n - 1)(m - 1)} included in the image sensor, a pixel value g_{(n - 1)m} output from the pixel p_{(n - 1)m} included in the image sensor, a pixel value g_{n(m - 1)} output from the pixel p_{n(m - 1)} included in the image sensor, and a pixel value gₙₘ output from the pixel pₙₘ included in the image sensor.

The following may be satisfied: the pixel value g1₁₁ = (g₁₁ + g₁₂ + g₂₁ + g₂₂)/4, ..., and the pixel value g1_{(n/d)(m/d)} = (g_{(n - 1)(m - 1)} + g_{(n - 1)m} + g_{n(m - 1)} + gₙₘ)/4.

The circuit can generate f2 = (f21 ... f2w)^{T} on the basis of the formula 1, specifically, g1 = (g1₁₁ ... g1ₙₘ)^{T} = [Hr1 ... Hrw]f2. This generation method has been described in the section related to the formula 1 and the formula 2. Note that f21 = (f21₁₁ ... f21_{(n/d)(m/d)})^{T}, ..., and f2w = (f2w₁₁ ... f2w_{(n/d)(m/d)})^{T}.

f21₁₁ is a pixel value of the pixel p21₁₁, ..., f21_{(n/d)(m/d)} is a pixel value of a pixel p21_{(n/d)(m/d)}, ..., f2w₁₁ is a pixel value of a pixel p2w₁₁, ..., and f2w_{(n/d)(m/d)} is a pixel value of a pixel p21w_{(n/d)(m/d)11}.

### Industrial Applicability

The present disclosure is applicable to an image processing method for image reconstruction, and can be used for an image processing system, an imaging system, a camera system, an analysis system, a recognition system, and the like.

### Reference Signs List

100 image processing system
110 imaging device
111 image sensor
112 filter array
113 optical system
120 image processing device
121,121a,121b,121c,121d,121e processing circuit
122 memory
130 display device

## Claims

1. An image processing method comprising:
detecting optical signals that correspond to pixels through an optical element having, for each of optical components, optical transmittances that correspond to the pixels;
acquiring a first compressed image signal obtained by summing the optical signals for each adjacent pixel group including two or more adjacent pixels among the pixels; and
generating a first reconstruction image signal group having reconstruction image signals that correspond to the optical components from the first compressed image signal in accordance with first transmittance information concerning the optical transmittances.

2. The image processing method according to claim 1, wherein
the optical components are wavelength bands.

3. The image processing method according to claim 1 or 2, wherein
the first transmittance information is acquired by unifying, for each adjacent pixel group including the two or more adjacent pixels, the optical transmittances of second transmittance information having, for each of the optical components, the optical transmittances that correspond to the pixels as information.

4. The image processing method according to claim 1 or 2, wherein
an optical signal that corresponds to a first pixel among the two or more adjacent pixels is an optical signal that has passed through a first region of the optical element,
an optical signal that corresponds to a second pixel among the two or more adjacent pixels is an optical signal that has passed through a second region of the optical element, and
an optical transmission spectrum of the first region with respect to the optical components is different from an optical transmission spectrum of the second region with respect to the optical components.

5. The image processing method according to claim 1 or 2, wherein
the optical element has optical transmission spectra that correspond to the pixels,
each of the optical transmission spectra is an optical transmission spectrum with respect to the optical components, and
the optical transmission spectra have spatial randomness with respect to the pixels.

6. The image processing method according to claim 1 or 2, further comprising acquiring a second compressed image signal having the optical signals, wherein
the first compressed image signal is acquired by summing the optical signals of the second compressed image signal for each adjacent pixel group including the two or more adjacent pixels.

7. The image processing method according to claim 1 or 2, further comprising switching between a first mode in which the first reconstruction image signal group is generated from the first compressed image signal and a second mode in which a second reconstruction image signal group is generated from a second compressed image signal having the optical signals.

8. The image processing method according to claim 7, wherein
in the switching between the first mode and the second mode, the first mode and the second mode are switched on a basis of a user's operation.

9. The image processing method according to claim 7, wherein
the number of pixel signals of each reconstruction image signal of the first reconstruction image signal group is smaller than the number of pixel signals of each reconstruction image signal of the second reconstruction image signal group.

10. The image processing method according to claim 1 or 2, wherein
the number of pixel signals of each reconstruction image signal of the first reconstruction image signal group is smaller than the number of pixels.

11. The image processing method according to claim 1 or 2, wherein
the number of pixel signals of each reconstruction image signal of the first reconstruction image signal group is identical to the number of pixel signals of the first compressed image signal.

12. The image processing method according to claim 1 or 2, wherein
the first transmittance information has, for each of the optical components, a smaller number of optical transmittances than the optical transmittances that correspond to the pixels as information.

13. The image processing method according to claim 1, wherein
the optical components are polarization directions.

14. The image processing method according to claim 1 or 2, wherein
the first compressed image signal is obtained by summing the optical signals for each adjacent pixel group including the two or more adjacent pixels and performing an averaging process.

15. An image processing method comprising:
detecting optical signals that correspond to pixels through an optical element having optical transmission spectra that correspond to the pixels;
acquiring a first compressed image signal obtained by summing the optical signals for each adjacent pixel group including two or more adjacent pixels among the pixels; and
generating a first reconstruction image signal group having reconstruction image signals that correspond to wavelength bands from the first compressed image signal in accordance with information concerning the optical transmission spectra.

16. An image processing system comprising:
an image sensor that detects optical signals that correspond to pixels through an optical element having, for each of optical components, optical transmittances that correspond to the pixels; and
a processing circuit that acquires a first compressed image signal obtained by summing the optical signals for each adjacent pixel group including two or more adjacent pixels among the pixels, wherein
the processing circuit generates a first reconstruction image signal group having reconstruction image signals that correspond to the optical components from the first compressed image signal in accordance with first transmittance information concerning the optical transmittances.
